(19) Europäisches Patentamt / European Patent Office / Office européen des brevets

(11) **EP 4 008 858 B1**

(12) **EUROPÄISCHE PATENTSCHRIFT**

(45) Veröffentlichungstag und Bekanntmachung des Hinweises auf die Patenterteilung:
**06.11.2024   Patentblatt 2024/45**

(21) Anmeldenummer: **21212380.6**

(22) Anmeldetag: **03.12.2021**

(51) Internationale Patentklassifikation (IPC):
**E04H 12/20** *(2006.01)*

(52) Gemeinsame Patentklassifikation (CPC):
**E04H 12/20**

(54) **TURMBAUWERK**

**TOWER STRUCTURE**

**TOUR**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2020   DE 102020132396**

(43) Veröffentlichungstag der Anmeldung:
**08.06.2022   Patentblatt 2022/23**

(60) Teilanmeldung:
**22186630.4 / 4 112 846**
**23158605.8 / 4 219 867**

(73) Patentinhaber: **enovation GmbH**
**18230 Ostseebad Rerik (DE)**

(72) Erfinder:
• **SUSEMIHL, Sabine**
**18225 Kühlungsborn (DE)**
• **HEIN, Robert**
**18057 Rostock (DE)**
• **BULL, Michael**
**18198 Kritzmow OT Groß Schwaß (DE)**
• **AHRENS, Robin**
**18057 Rostock (DE)**
• **BOCKHOLT, Stefan**
**18255 Kühlungsborn (DE)**
• **PORM, Karsten**
**18236 Kröpelin OT Diedrichshagen (DE)**

(74) Vertreter: **2SPL Patentanwälte PartG mbB**
**Landaubogen 3**
**81373 München (DE)**

(56) Entgegenhaltungen:
**EP-A2- 2 388 878        CH-A5- 693 103**
**CN-A- 108 729 731**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Technisches Gebiet

Ausführungsbeispiele befassen sich mit Turmbauwerken, Fundamenten zum Tragen von Türmen und Windenergieanlagen.

### Hintergrund

On-Shore Windenergieanlagen (WEAs) benötigen für einen wirtschaftlichen Betrieb große Nabenhöhen (z.B. > 140m) und große Rotordurchmesser (z.B. >130m). Für große Nabenhöhen und große Rotordurchmesser werden für die Türme der WEAs große Turmfußdurchmesser gefordert, um die auftretenden Biegemomente aufnehmen zu können. Transportrahmenbedingungen, wie z.B. Durchfahrtshöhen an Land beschränken allerdings die maximal möglichen Durchmesser für Turmsektionen auf 4,4 m.

Eine Möglichkeit zum Errichten von WEAs mit großen Nabenhöhen bzw. Rotordurchmessein bieten Abspannungen. Abspannungen werden am Turm befestigt und erstrecken sich von einer bestimmten Turmhöhe der WEA bis zum Boden. Eine effektive Abspannung erfordert allerdings einen hohen Platzbedarf am Boden, da die für die Abspannung benötigten Abspannseile üblicherweise mit einem Abstand von 40-100m am Boden um die WEA gespannt werden. Ein größerer Platzbedarf am Boden ist allerdings mit höheren Kosten für die Flächensicherung und höheren Anforderungen an die Geländetopologie verbunden.

Ein anderer Aspekt von Abspannungen betrifft die Befestigung der Abspannseile am Turm. Aufgrund der Befestigung wirken sich die hohen Lasten, die über die Abspannseile auf den Turm übertragen werden, oftmals negativ auf das Beulverhalten der Turmstruktur aus.

Die Druckschriften EP 2 388 878 A2, CN 108 729 731 A und CH 693 103 A5 beschreiben bekannte Abspannvorrichtungen.

### Zusammenfassung

Es besteht ein Bedarf für Turmbauwerke oder für Komponenten von Turmbauwerken eine verbesserte Abspannung zu schaffen, eine verbesserte Lastübertragung auf das Turmbauwerk zu erreichen und/oder eine Reduktion des Platzbedarfs des Turmbauwerks zu ermöglichen. Dieser Bedarf könnte durch den Gegenstand einer der vorliegenden Ansprüche gedeckt werden.

In einem Ausführungsbeispiel umfasst ein Turmbauwerk einen Turm entlang einer senkrechten Turmachse und ein Abspannseil, das sich aus einer ersten Abspannrichtung zu einer Umlenkstruktur am oder im Turm erstreckt und sich von der Umlenkstruktur in einer zweiten Abspannrichtung in Richtung Boden erstreckt, wobei sich die erste Abspannrichtung von der zweiten Abspannrichtung unterscheidet, wobei die erste Abspannrichtung und die zweite Abspannrichtung in einer Aufsicht einen Winkel kleiner als 180° bilden, wobei die Turmachse außerhalb eines Bereichs liegt, der von dem Abspannseil zwischen der ersten Abspannrichtung und der zweiten Abspannrichtung begrenzt wird.

In einem unbeanspruchten Ausführungsbeispiel umfasst ein Turmbauwerk einen Turm entlang einer senkrechten Turmachse und ein Fundament zum Tragen des Turmes, wobei der Turm auf dem Fundament steht, wobei das Fundament einen äußeren Kraftumlenkbereich aufweist, der einen radialen Abstand von der Turmachse aufweist. Ferner umfasst das Turmbauwerk eine erste Abspannstruktur, wobei sich die erste Abspannstruktur von dem äußeren Kraftumlenkbereich zu einem Teil des Turms oberhalb des Fundaments erstreckt, wobei sich die erste Abspannstruktur oder eine mit der ersten Abspannstruktur an dem äußeren Kraftumlenkbereich gekoppelte, zweite Abspannstruktur von dem äußeren Kraftumlenkbereich zu einem inneren Abspannbereich unterhalb des äußeren Kraftumlenkbereichs erstreckt, wobei ein radialer Abstand des inneren Abspannbereichs von der Turmachse kleiner ist als der radiale Abstand des äußeren Kraftumlenkbereichs.

In einem weiteren unbeanspruchten Ausführungsbeispiel umfasst ein Turmbauwerk einen Turm entlang einer senkrechten Turmachse und ein Fundament zum Tragen des Turmes, wobei der Turm auf dem Fundament steht, wobei das Fundament einen äußeren Kraftumlenkbereich aufweist, der außerhalb einer Grundfläche des Turms liegt. Ferner umfasst das Turmbauwerk eine Abspannstruktur, die sich von einer Außenseite des Turms zu dem äußeren Kraftumlenkbereich erstreckt und von dem äußeren Kraftumlenkbereich durch eine Öffnung im Fundament von unterhalb des Turms zu einer Befestigungsstruktur im Turminneren erstreckt.

Einige Ausführungsbeispiele beziehen sich auf Fundamente zum Tragen eines Turmes. Das Fundament umfasst einen ersten Arm, der sich bis zu einem maximalen radialen Abstand von einem Mittelpunkt eines Turmaufstellbereichs des Fundaments in eine erste Richtung erstreckt. Ferner umfasst das Fundament einen zweiten Arm, der sich bis zu einem maximalen radialen Abstand von einem Mittelpunkt des Turmaufstellbereichs des Fundaments in eine zweite Richtung erstreckt, wobei sich das Fundament zwischen dem ersten Arm und dem zweiten Arm zumindest bis zu einem minimalen radialen Abstand von dem Mittelpunkt des Turmaufstellbereichs des Fundaments erstreckt, wobei der minimale radiale Abstand mindestens 25% und maximal 70% des maximalen radialen Abstands des ersten Arms beträgt.

Weitere Ausführungsbeispiele beziehen sich auf Windenergieanlagen, die ein Turmbauwerk und/oder ein Fundament gemäß einem der oben genannten Ausführungsbeispiele umfassen.

## Figurenkurzbeschreibung

Einige Beispiele von Vorrichtungen und/oder Verfahren werden nachfolgend bezugnehmend auf die beiliegenden Figuren lediglich beispielhaft näher erläutert. Es zeigen:

Fig. 1 ein Ausführungsbeispiel eines Turmbauwerks;

Fig. 2 ein Beispiel für eine Aufsicht eines Turmbauwerks;

Fig. 3 ein Beispiel für eine Umlenkstruktur;

Fig. 4 ein weiteres Beispiel für eine Umlenkstruktur;

Fig. 5 ein Beispiel für eine Aufsicht eines Turmbauwerks mit einer Umlenkanordnung;

Fig. 6 ein weiteres Ausführungsbeispiel eines Turmbauwerks;

Fig. 7 ein Ausführungsbeispiel eines Turmbauwerks mit Umlenkelementen;

Fig. 8 ein Ausführungsbeispiel eines Turmbauwerks mit unterschiedlichen Abspannhöhen;

Fig. 9 ein Ausführungsbeispiel eines Turmbauwerks mit unterschiedlichen Abspannradien;

Fig. 10 ein Ausführungsbeispiels eines Turmbauwerks mit einem äußeren Kraftumlenkbereich;

Fig. 11 ein weiteres Ausführungsbeispiel eines Turmbauwerks mit einem äußeren Kraftumlenkbereich;

Fig. 12 ein Ausführungsbeispiel eines Fundaments; und

Fig. 13 ein Ausführungsbeispiel einer Windenergieanlage.

## Beschreibung

Einige Beispiele werden nun ausführlicher Bezug nehmend auf die beiliegenden Figuren beschrieben. Weitere mögliche Beispiele sind jedoch nicht auf die Merkmale dieser detailliert beschriebenen Ausführungsformen beschränkt. Diese können Modifikationen der Merkmale sowie Entsprechungen und Alternativen zu den Merkmalen aufweisen. Ferner soll die Terminologie, die hierin zum Beschreiben bestimmter Beispiele verwendet wird, nicht einschränkend für weitere mögliche Beispiele sein.

Gleiche oder ähnliche Bezugszeichen beziehen sich in der gesamten Beschreibung der Figuren auf gleiche oder ähnliche Elemente beziehungsweise Merkmale, die jeweils identisch oder auch in abgewandelter Form implementiert sein können, während sie die gleiche oder eine ähnliche Funktion bereitstellen. In den Figuren können ferner die Stärken von Linien, Schichten und/oder Bereichen zur Verdeutlichung übertrieben sein.

Wenn zwei Elemente A und B unter Verwendung eines "oder" kombiniert werden, ist dies so zu verstehen, dass alle möglichen Kombinationen offenbart sind, d. h. nur A, nur B sowie A und B, sofern nicht im Einzelfall ausdrücklich anders definiert. Als alternative Formulierung für die gleichen Kombinationen kann "zumindest eines von A und B" oder "A und/oder B" verwendet werden. Das gilt Äquivalent für Kombinationen von mehr als zwei Elementen.

Wenn eine Singularform, z. B. "ein, eine" und "der, die, das" verwendet wird und die Verwendung nur eines einzelnen Elements weder explizit noch implizit als verpflichtend definiert ist, können weitere Beispiele auch mehrere Elemente verwenden, um die gleiche Funktion zu implementieren. Wenn eine Funktion im Folgenden als unter Verwendung mehrerer Elemente implementiert beschrieben ist, können weitere Beispiele die gleiche Funktion unter Verwendung eines einzelnen Elements oder einer einzelnen Verarbeitungsentität implementieren. Es versteht sich weiterhin, dass die Begriffe "umfasst", "umfassend", "aufweist" und/oder "aufweisend" bei deren Gebrauch das Vorhandensein der angegebenen Merkmale, Ganzzahlen, Schritte, Operationen, Prozesse, Elemente, Komponenten und/oder einer Gruppe derselben beschreiben, dabei aber nicht das Vorhandensein oder das Hinzufügen eines oder mehrerer anderer Merkmale, Ganzzahlen, Schritte, Operationen, Prozesse, Elemente, Komponenten und/einer Gruppe derselben ausschließen.

Einige Ausführungsbeispiele beziehen sich auf Turmbauwerke. Ein Turmbauwerk umfasst einen Turm entlang einer senkrechten Turmachse und ein Abspannseil, das sich aus einer ersten Abspannrichtung zu einer Umlenkstruktur am oder im Turm erstreckt und sich von der Umlenkstruktur in einer zweiten Abspannrichtung in Richtung Boden erstreckt. Die erste Abspannrichtung unterscheidet sich von der zweiten Abspannrichtung. Die erste Abspannrichtung und die zweite Abspannrichtung bilden in einer Aufsicht einen Winkel kleiner als 180°. Die Turmachse liegt außerhalb eines Bereichs, der von dem Abspannseil zwischen der ersten Abspannrichtung und der zweiten Abspannrichtung begrenzt wird.

Durch das Abspannseil kann eine Abspannung des Turms erfolgen, sodass eine Biegebeanspruchung des Turms reduziert werden kann. Zum Beispiel kann das Abspannseil über eine Vorrichtung im Boden vorgespannt werden, sodass eine von dem Abspannseil aufgenommene Zugkraft in die Vorrichtung im Boden eingeleitet werden kann. Das Abspannseil kann über die Umlenkstruktur mit dem Turm verbunden werden. Die Umlenkstruktur kann das Abspannseil von der ersten Abspannrichtung in die zweite Abspannrichtung umlenken. Durch die Umlenkung des Abspannseils am oder im Turm kann über das Abspannseil eine Lasteinleitung in den Turm großflächiger erfolgen. Durch die flächige Lasteinleitung kann der Turm gleichmäßiger beansprucht werden. Die Lage der Turmachse außerhalb des Bereichs, der von dem Abspannseil zwischen der ersten Abspannrichtung und der zweiten Abspannrichtung begrenzt wird, kann eine zur Turmachse exzentrische Umlenkung des Abspannseils ermöglichen. Eine exzentrische Umlenkung kann eine effizientere Krafteinleitung in den Turm bewirken. Nach diesem Konzept brauchen für eine effiziente Abspannung des Turms die erste Abspannrichtung und die zweite Abspannrichtung nicht zur Turmachse zeigen. Durch die effizientere Abspannung des Turmes könnte der Turm innerhalb der Transportrahmenbedingungen von z.B. 4,40 m ausgeführt werden. Beispielsweise kann eine zusätzliche Unterteilung von Turmsektionen vermieden werden.

Die Umlenkstruktur kann derart ausgebildet sein, dass das Abspannseil von der ersten in die zweite Abspannrichtung umgelenkt werden kann. Die Umlenkstruktur kann eine von dem Abspannseil übertragene Kraft als Druckkraft aufnehmen und in den Turm einleiten, wenn sie beispielsweise im Turminneren angeordnet ist. Ein Abschnitt des Abspannseil kann mit der Umlenkstruktur gekoppelt sein. Zum Beispiel kann ein Abschnitt des Abspannseils auf der Umlenkstruktur aufliegen oder ein Abschnitt des Abspannseils kann sich durch die Umlenkstruktur erstrecken. Die Umlenkstruktur kann z.B. aus Stahl sein und derart mit dem Turm verbunden, z.B. verschweißt oder verschraubt sein, dass eine flächige Lasteinleitung in den Turm erfolgen kann. Die Umlenkstruktur kann derart ausgebildet und mit dem Turm verbunden sein, dass die erste und zweite Abspannrichtung exzentrisch zur Turmachse ausgerichtet sein können.

Die Umlenkstruktur kann am oder im Turm ausgebildet sein. Zum Beispiel kann die Umlenkstruktur mit einer Innenseite der Turmwand oder einer Außenseite der Turmwand gekoppelt sein. Durch die Anordnung der Umlenkstruktur im Turminnern kann diese beispielsweise vor äußeren Einflüssen, z.B. Nässe, geschützt sein. Durch die Verbindung der Umlenkstruktur an einer Turmaußenwand kann die Umlenkung des Abspannseils mit einer größeren Entfernung von der Turmachse erfolgen und/oder eine Durchführung des Abspannseils durch die Turmwand kann vermieden werden. Die Krafteinwirkung auf die Turmwand kann sich je nach Anordnung der Umlenkstruktur relativ zur Turmachse oder zur Turmwand, unterscheiden.

Die Aufsicht kann beispielsweise ein Querschnitt senkrecht zur Turmachse sein oder im Allgemeinen eine Darstellung umfassen, die im Wesentlichen senkrecht zur Turmachse verläuft.

Die erste Abspannrichtung und die zweite Abspannrichtung können beispielsweise einen Winkel größer als 30°, 40°, 60°, 90°, 120° oder 150° einschließen.

Beispielsweise können die erste Abspannrichtung und die zweite Abspannrichtung in einer Aufsicht einen Winkel größer als 10° (oder größer als 30°, 40°, 60°, 90°, 120° oder 150°) bilden. Der Abschnitt des Abspannseils, der mit der Umlenkstruktur gekoppelt ist und der Abschnitt des Abspannseils, der sich außerhalb der Umlenkstruktur in die erste und zweite Abspannrichtung erstreckt, können zusammen einen Bereich einschließen, der die Turmachse nicht umfasst. Die erste Abspannrichtung und die zweite Abspannrichtung können in Richtung Boden ausgerichtet sein. Im Allgemeinen kann die erste und die zweite Abspannrichtung in Richtung eines Bereichs zeigen, der sich unterhalb der Umlenkstruktur im Hinblick auf die Turmachse befindet. Der Bereich unterhalb der Umlenkstruktur kann z.B. eine Turmsektion unterhalb der Umlenkstruktur, den Turmfuß, das Fundament, die Oberfläche unmittelbar oberhalb des Bodens oder einen Teil des Bodens umfassen.

Beispielsweise kann die erste Abspannrichtung auf einen ersten Punkt am Boden gerichtet sein (und/oder von dem ersten Punkt zu der Umlenkstruktur gerichtet sein) und die zweite Abspannrichtung kann auf einen zweiten Punkt am Boden gerichtet sein (und/oder von dem zweiten Punkt zu der Umlenkstruktur gerichtet sein). Der erste Punkt am Boden und/oder der zweite Punkt am Boden haben beispielsweise einen Abstand von der Turmwand von mehr als 2 m (oder mehr als 5 m oder mehr als 10 m). Der Abstand von der Turmwand des ersten Punkts am Boden kann sich um weniger als 1m oder weniger als 50% von dem Abstand von der Turmwand des zweiten Punkts am Boden unterscheiden.

Das Abspannseil kann eine beliebige Seilstruktur sein, die es ermöglicht, eine Zugkraft aufzunehmen und auf die Umlenkstruktur zu übertragen. Beispielsweise ist das Abspannseil ein Stahlseil. Das Abspannseil kann sich bis zum Boden (z.B. zu einer Verankerung am Fundament) erstrecken oder Teil einer mehrteiligen Abspannstruktur sein, die neben dem Abspannseil ein oder mehrere Seilabschnitte, ein oder mehrere Ketten oder ein oder mehrere Stangen umfasst. Im Vergleich zu einer einteiligen Abspannstruktur, die nur das Abspannseil umfasst, kann z.B. ein mehrteilige Abspannstruktur Abschnitte mit unterschiedlichen Durchmessern, Formen, Strukturen oder Materialien umfassen. Das Abspannseil ist beispielsweise zur Ausrichtung in die erste und zweite Abspannrichtung um die Umlenkstruktur gebogen.

Der Turm kann eine beliebig hohe Einrichtung sein, die sich vom Boden in eine Höhe erstreckt. Der Turm hat beispielsweise eine vielfach größere Höhe als Durchmesser. Zur Reduktion von Torsions- und Biegemomenten am Turm, kann der Turm mittels der Abspannseile gespannt werden. Zum Beispiel kann der Turm abhängig von der Höhe mehrere Turmsektionen haben. Der Turm kann beispielsweise mehr als 50m, mehr als 80m, mehr als 100m, mehr als 120m, mehr als 140m, mehr als 160m oder mehr als 180m hoch sein. Der Turm kann an unterschiedlichen Höhen abgespannt werden. Zum Beispiel kann der Turm aus Stahl gefertigte Turmsektionen umfassen.

Die Turmachse kann senkrecht z.B. zu einem Boden, einem Fundament des Turms, oder zu einer Fläche zum Aufstellen des Turmes sein. Die senkrechte Turmachse kann parallel zur Richtung der Schwerkraft sein. Die senkrechte Turmachse kann beispielsweise von der Richtung der Schwerkraft um maximal 5mm pro Meter der Turmhöhe (ohne Berücksichtigung einer Schräglage des Fundaments) oder maximal 8mm pro Meter der Turmhöhe (mit Berücksichtigung einer Schräglage des Fundaments) abweichen.

Für eine effektive Abspannung kann das Turmbauwerk mehr als ein Abspannseil und mehr als eine Umlenkstruktur umfassen. Beispielsweise kann ein Turmbauwerk zwei, drei oder mehr Abspannseile und/oder Umlenkstrukturen umfassen. Abspannseile und Umlenkstrukturen können am Turm derart verteilt sein, dass der Turm möglichst gleichmäßig belasten werden kann. Beispielsweise können Abspannseile und Umlenkstrukturen symmetrisch oder mit einem gleichen Winkel hinsichtlich der Turmachse oder zueinander angeordnet sein. Gemäß einem Beispiel kann ein Turmbauwerk genauso viele Abspannseile wie Umlenkstrukturen, mehr Abspannseile als Umlenkstrukturen oder weniger Abspannseile als Umlenkstrukturen umfassen.

Der zu errichtende Turm umfasst beispielsweise eine Mehrzahl von übereinander angeordneten Turmsektionen, die einteilig oder mehrteilig ausgebildet sein können. Beispielsweise können die Turmsektion einteilig ausgebildet sein, wenn sie innerhalb der Transportrahmenbedingungen von z.B. 4,4m gefertigt werden. Z.B. kann der Turm oder alle Turmsektionen des Turms einen maximalen Durchmesser von maximal 4,5m (oder maximal 4m oder maximal 3,5m) aufweisen, beispielsweise bei einer Höhe von mehr als 120m (oder mehr als 140m, mehr als 160m oder mehr als 180m). Die Turmwand oder Schale des Turms oder der Turmsektion kann beispielsweise zylindermantelförmig oder kegelstumpfmantelförmig sein und/oder eine Stahlschale oder Stahlblechschale sein. Die Turmwand oder die Turmschale kann beispielsweise eine Dicke von mehr als 20 mm, 30 mm, 40 mm oder mehr aufweisen.

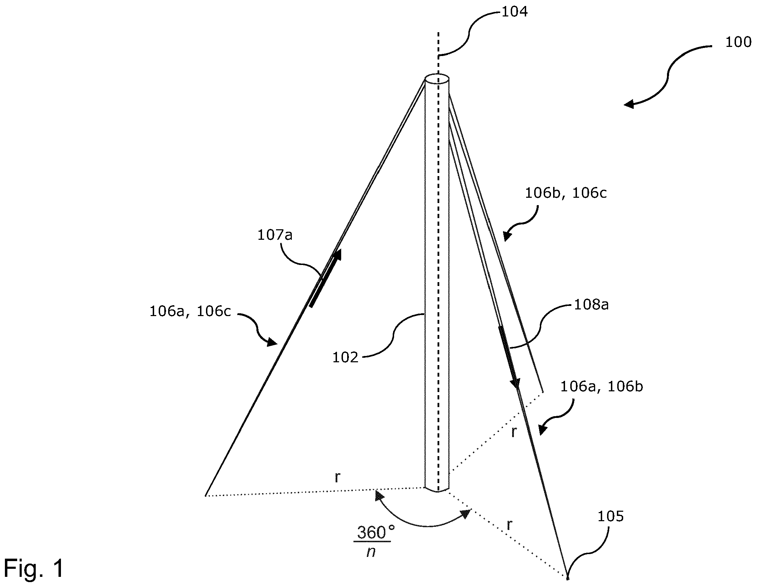

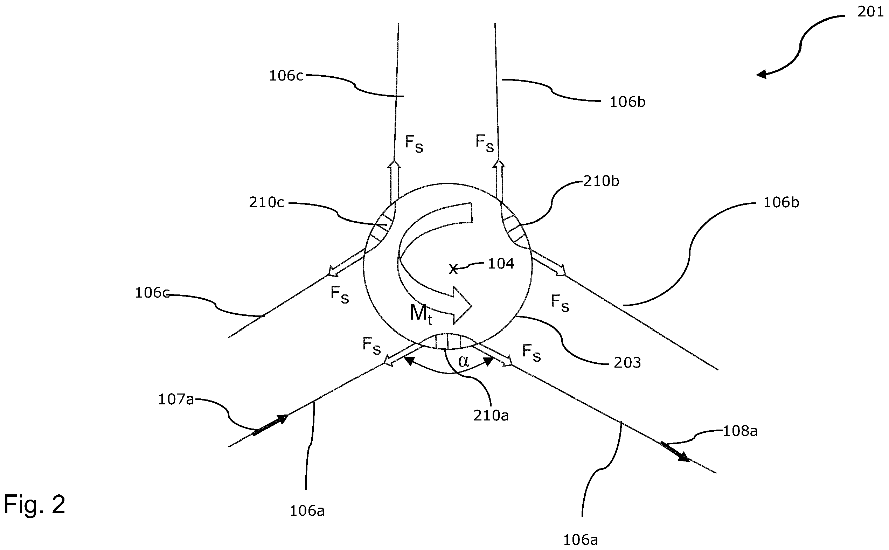

Fig. 1 zeigt ein Ausführungsbeispiel eines Turmbauwerks 100 mit einen Turm 102 entlang einer senkrechten Turmachse 104 und drei Abspannseilen 106a-c. Ein Abspannseil, wie z.B. Abspannseil 106a, erstreckt sich aus einer ersten Abspannrichtung 107a zu einer Umlenkstruktur am oder im Turm 102 und erstreckt sich von der Umlenkstruktur in eine zweite Abspannrichtung 108a in Richtung Boden. Die erste Abspannrichtung 107a unterscheidet sich von der zweiten Abspannrichtung 108a. Für ein besseres Verständnis für die Umlenkung der Abspannseile 106a-c am oder im Turm 102, zeigt Fig. 2 beispielhaft eine Aufsicht 201 des Turmbauwerks 100 mit Umlenkstrukturen 210a-c an einer Turmwand 203. In der Aufsicht 201 bilden die erste Abspannrichtung 107a und die zweite Abspannrichtung 108a des Abspannseils 106a einen Winkel $\alpha$ kleiner als 180°. Ferner liegt die Turmachse 104 außerhalb eines Bereichs, der von dem Abspannseil 106a zwischen der ersten Abspannrichtung 107a und der zweiten Abspannrichtung 108a begrenzt wird. Die Turmachse 104 liegt in dem Bereich 360° - $\alpha$, der durch das Abspannseil 106a begrenzt ist.

Beispielsweise können die erste Abspannrichtung und die zweite Abspannrichtung in einer Aufsicht einen Winkel kleiner als 180° (oder kleiner als 160°, kleiner als 130°, kleiner als 100° oder kleiner als 80°) und/oder größer als 10° (oder größer als 20°, größer als 30°, größer als 40°, größer als 60°, größer als 90°, größer als 120° oder größer als 150°) bilden.

Wie beispielhaft in der Aufsicht 201 gezeigt ist, können auch die weiteren Abspannseile 106b-c wie das Abspannseil 106a an den entsprechenden Umlenkstrukturen 210b-c umgelenkt werden. Beispielsweise erstreckt sich das Abspannseil 106b aus einer dritten Abspannrichtung zu der Umlenkstruktur 210b am oder im Turm 102 und erstreckt sich von der Umlenkstruktur 210b in eine vierte Abspannrichtung in Richtung Boden.

In dem in Fig. 1 und Fig. 2 gezeigten Turmbauwerk 100 sind die Umlenkstrukturen 210a-c mit der Turmwand 203 des Turms 102 derart verbunden, dass sich von den Abspannseilen 106a-c auf die Umlenkstrukturen 210a-c übertragene Kräfte auf die Turmwand 203 übertragen. Fig. 2 zeigt beispielhaft die Richtung der Seilzugkräfte Fs, die jeweils an den Abspannseilen 106a-c aufgrund einer Krafteinwirkung auf den Turm 102 auftreten können. Die Abspannseile 106a-c können Zugkräfte Fs mittels der Umlenkstrukturen 210a-c auf die Turmwand 203, übertragen. Mittels der Umlenkstrukturen 210a-c kann eine Lasteinleitung in die Turmwand 203 flächig erfolgen kann. Durch die flächige Lasteinleitung in den/am Turm 102 kann die Turmwand 203 gleichmäßig beansprucht werden, sodass der Turm 102 bzw. die Turmwand 203 größere Kräfte bis zu einer Ermüdung aufnehmen kann. Beispielsweise kann die auftretende Seilkraft $F_S$ zum Teil tangential zum Turm 102 wirken. Die zum Turm 102 wirkende Seilkraft $F_S$ kann etwaigen Torsionsmomenten $M_t$ entgegenwirken oder kann zu einer torsionssteiferen Einspannung in der Abspannebene beitragen.

Mittels der Abspannseile 106a-c, die über die Umlenkstrukturen 210a-c umgelenkt werden, kann eine Abspannung des Turmbauwerks 100 exzentrisch zur Turmachse 104 erfolgen. Zum Beispiel brauchen die Abspannseile 106a-c nicht auf die Turmachse 104 ausgerichtet sein bzw. die erste und die zweite Abspannrichtung 107a und 108a brauchen für eine effektive Abspannung nicht zur Turmachse 104 zeigen.

In den nachfolgenden Beschreibungen wird das Turmbauwerk 100 in Verbindung mit dem Abspannseil 106a und der Umlenkstruktur 210a näher ausgeführt. Die Ausführungen können sich dabei ebenso auf die Abspannseile 106b-c und auf die Umlenkstrukturen 210b-c beziehen. In den Ausführungen kann das Abspannseil 106a als erstes Abspannseil, die Umlenkstruktur 210a als erste Umlenkstruktur bezeichnet sein. Das Abspannseil 106b oder 106c kann als weiteres, anderes zweites oder drittes Abspannseil und die Umlenkstruktur 210b oder 210c kann als weitere, andere, zweite oder dritte Umlenkstruktur bezeichnet sein.

Andere Ausführungsbeispiele können mehr als drei Abspannseile und Umlenkstrukturen umfassen. Falls geeignet, können andere Ausführungsbeispiele zumindest ein erstes Abspannseil 106a und eine erste Umlenkstruktur 210a gemäß der obigen Beschreibung umfassen und mit einer anderen Abspannmethode zur Abspannung des Turmbauwerks 100 kombiniert werden.

Weitere Einzelheiten und optionale Aspekte des Turmbauwerks 100 sind in Verbindung mit dem vorgeschlagenen Konzept oder einem oder mehreren der im Folgenden beschriebenen Beispiele beschrieben.

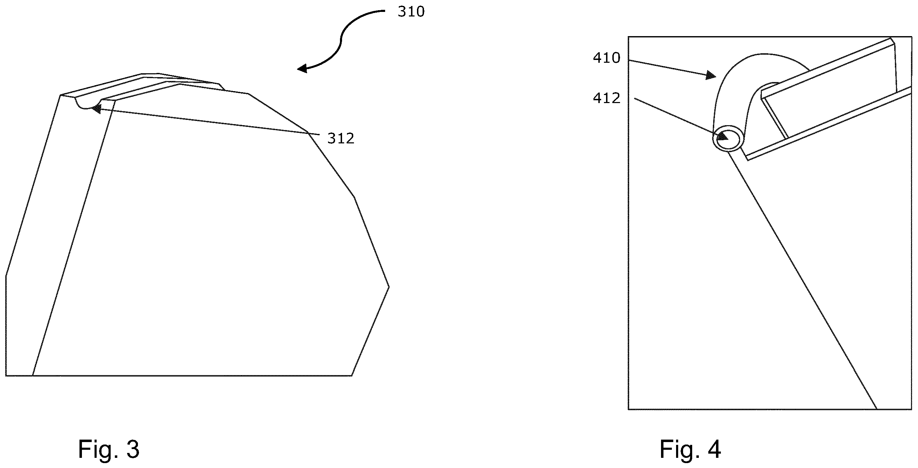

Fig. 3 und Fig. 4 zeigen jeweils Beispiele für Umlenkstrukturen 310 und 410 mit Kontaktflächen 312 bzw. 412. Dabei dient die Kontaktfläche 312, 412 als eine Auflagefläche oder einem Bereich zum Auflegen eines Abspannseils 106a. Die Kontaktfläche 312 der Umlenkstruktur 310 in Fig. 3, ist in einer rillenförmigen Vertiefung an einer Oberfläche der Umlenkstruktur 310 ausgebildet. Da die Kontaktfläche 312 an einer Oberfläche der Umlenkstruktur 310 ausgebildet ist, kann die Umlenkstruktur 312 auch als offenes Seilauflager bezeichnet werden. In Fig. 4 ist zu erkennen, dass die Umlenkstruktur 410 einen rohrförmigen Bereich aufweist. Die Kontaktfläche 412 ist in dem rohrförmigen Bereich der Umlenkstruktur 410 ausgebildet. Da die Kontaktfläche an einer Innenseite bzw. einem Hohlraum der Umlenkstruktur 310 ausgebildet ist, kann die Umlenkstruktur 410 auch als ein geschlossenes Seilauflager bezeichnet werden. Die Kontaktflächen 312, 412 der Umlenkstrukturen 310, 410 können auf eine Form oder Kontur des Abspannseils 106a ausgerichtet sein. Zum Bespiel kann die rillenförmige Vertiefung in Fig. 3 oder der Durchmesser des rohrförmigen Bereichs auf eine Dicke des Abspannseils 106a angepasst sein. Die Kontaktflächen 312 und 412 der Umlenkstrukturen 310 und 410 können gemäß der ersten und zweiten Abspannrichtung 107a und 108a ausgebildet sein. Im Vergleich zu der Umlenkstruktur 310, kann die Umlenkstruktur 410 ermöglichen, dass ein aufliegendes Abspannseil 106a aus dem rohrförmigen Bereich aufgrund der geschlossenen Form nicht herausfallen kann. Umlenkstrukturen in geschlossene Form können Abspannseile z.B. vor Nässe schützen. Umlenkstrukturen, wie z.B. Seilauflager, können neben der offenen oder geschlossenen Art auch massiv als Schweiß- oder Gusskonstruktion ausgeführt sein.

Wie in den Beispielen in Fig. 3-4 gezeigt, weist die Kontaktfläche 312, 412 der Umlenkstruktur 310, 410 eine Krümmung mit einem Krümmungsradius auf. Zum Beispiel ist der doppelte Krümmungsradius größer als ein minimaler Biegerollendurchmesser eines darauf aufliegenden Abspannseils 106a. Die Beschränkung der Krümmung der Kontaktfläche 312, 412 gemäß dem minimalen Biegenrollendurchmesser des Abspannseils 106a kann sinnvoll sein, um die Umlenkstruktur 310, 410 und das Abspannseil 106a infolge einer zu großen Pressung nicht zu schädigen. Durch die Begrenzung der Kontaktfläche 312, 412 auf eine maximale Krümmung kann z.B. gewährleistet werden, dass die Druckfestigkeit von dem Material der Umlenkstruktur, wie z.B. Stahl, nicht überschritten wird und/oder das Abspannseil nicht zu stark verformt oder beschädigt wird. Ein zulässiger kleinster Biege- bzw. Umlenkradius z.B. bei einem Drahtseil kann auf den 18-fachen Seildurchmesser abgestimmt sein.

Mittels der Umlenkstruktur 310, 410 kann das Abspannseil 106a am oder im Turm umgelenkt werden, sodass eine Abspannung des Turmbauwerks 100 ermöglicht wird. Das Abspannseil 106a kann auf der Umlenkstruktur 310, 410 derart aufgelegt werden, dass eine aufwendige Befestigung des Abspannseils 106a am oder im Turm 102 vermieden werden kann. Zum Beispiel kann die Kontaktfläche 312 oder 412 eine Beschaffenheit aufweisen, sodass ein Reibungskoeffizient zwischen der Kontaktfläche 312, 412 und dem Abspannseil 106a derart groß ist, sodass durch eine Vorspannung des Abspannseils 106a oder eine Befestigungsvorrichtung ein Reibschluss zwischen der Umlenkstruktur 310, 410 und dem Abspannseil 106a entsteht. Aufgrund der höheren (Haft)Reibung zwischen des Abspannseils 106a und der Umlenkstruktur 310, 410 oder durch die Klemmvorrichtung, kann eine Bewegung des Abspannseils 106a auf der Umlenkstruktur 310, 410 vermieden oder reduziert werden. Durch die Lagesicherung oder Bewegungseinschränkung kann z.B. ein Abrieb der Umlenkstruktur 310, 410 oder des Abspannseils 106a vermieden oder reduziert werden.

Gemäß anderen Beispielen kann das Abspannseil 106a an die Umlenkstruktur 210a, 310, 410 auch anders angeordnet oder befestigt werden. Falls geeignet, kann das Abspannseil 106a an die Umlenkstruktur 210a, 310, 410 zumindest an einzelnen Bereichen geklebt, verdrahtet, eingehakt, verschraubt, verschweißt oder gepresst werden.

Weitere Einzelheiten und optionale Aspekte der Umlenkstrukturen 210a-c, 310, 410 sind in Verbindung mit dem vorgeschlagenen Konzept oder einem oder mehreren der zuvor oder im Folgenden beschriebenen Beispiele beschrieben.

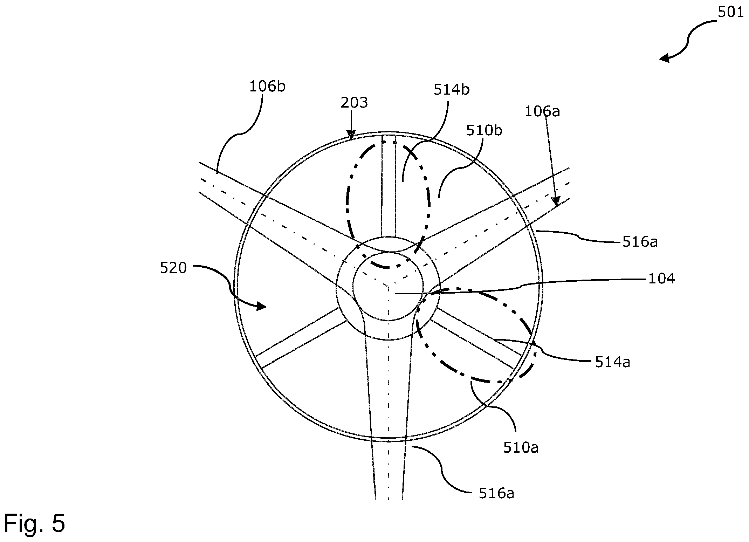

Fig. 5 zeigt ein weiteres Beispiel für eine Aufsicht 501 eines Turmbauwerks, wie z.B. des Turmbauwerks 100 in Fig. 1. Es ist gezeigt, dass eine Umlenkstruktur 510a des Abspannseils 106a und eine zweite Umlenkstruktur 510b des Abspannseils 106b in einer Umlenkanordnung 520 ausgebildet sind. Durch die Umlenkanordnung 520 werden die Umlenkstrukturen 510ab im Inneren des Turms 102 angeordnet und mit einer Innenseite der Turmwand 203 verbunden. Die Umlenkanordnung 520 umfasst die Umlenkstruktur 510a und die zweite Umlenkstruktur 510b und weist einen zentralen offenen Bereich auf, durch den die Turmachse 104 verläuft.

Jede Umlenkstruktur 510a-b umfasst zumindest ein Verbindungselement 514a-b, das einen die Kontaktfläche umfassenden Teil der Umlenkstruktur mit der Innenseite der Turmwand 203 verbindet. Beispielsweise ist die Kontaktfläche, wie in Fig. 4 gezeigt, in einem röhrenförmigen Bereich der Umlenkstruktur 510a ausgebildet. Das Abspannseil 106a verläuft durch den röhrenförmigen Bereich der Umlenkstruktur 510a und wird von einer ersten Richtung in eine zweite Richtung umgelenkt.

Das Verbindungselement 514a, 514b kann derart ausgebildet sein, dass eine von dem Abspannseil 106a, 106b auf die Umlenkstruktur 5 10a-b übertragene Kraft effizient auf die Turmwand 203 weitergeleitet oder verteilt werden kann. Wie in Fig. 5 gezeigt, kann das Verbindungselement 514a der Umlenkstruktur 510a einem Zylinder mit gleichem Durchmesser oder einem Rohr entsprechen. Die Anordnung des Verbindungselements 514a kann auf eine Mitte oder eine Symmetrieachse der Kontaktfläche in der Umlenkstruktur 510a ausgerichtet sein. Die Enden des Verbindungselements 514a können für eine geeignete Befestigung z.B. mit der Turmwand 203 angepasst, wie z.B. abgerundet oder zusätzlich mit einem Befestigungselement, ausgestattet sein. Für eine bessere Kraftverteilung auf die Turmwand 203 kann das eine Ende des Verbindungselement 514a, das zur Turmwand 203 zugewandt ist, einen größeren Durchmesser haben als das gegenüberliegende Ende des Verbindungselements 514a. Zum Beispiel ist das Verbindungselement 514a kegelförmig. In einem anderen Beispiel kann die Umlenkstruktur 510a zwei oder mehr Verbindungselemente 514a umfassen. Die zwei oder mehr Verbindungselemente 514a können mit einem Abstand zueinander innerhalb eines Bereichs, der durch das Abspannseil 106a begrenzt wird, mit der Turmwand 203 verbunden werden. Zwei oder mehr Verbindungselemente 514a können zu einer gleichmäßigeren Lastverteilung der von dem Abspannseil übertragenen Kraft auf die Turmwand 203 beitragen.

Wie in Fig. 5 gezeigt, ist der zentrale offene Bereich der Umlenkanordnung 520 ringförmig bzw. rohrförmig ausgebildet. In einem anderen Beispiel kann der zentrale offene Bereich oval, rechteckig, viereckig, sternförmig, trapezförmig, symmetrisch, asymmetrisch oder massiv sein. Im Vergleich zu den Umlenkelementen 210a-c in Fig. 2, kann die Umlenkanordnung 520 dazu beitragen, dass eine Umlenkung der Abspannseile 106a-c im Turminneren näher zu der Turmachse 104 erfolgt. Durch die Umlenkanordnung 520 können die Umlenkstrukturen in einem gemeinsamen Bauteil ausgebildet sein.

In Fig. 5, weist die Turmwand 203 zumindest zwei Öffnungen 516a auf, durch die das Abspannseil 106a von außen zu der Umlenkstruktur 510a im Turminneren geführt wird. Durch die Öffnungen 516a kann sich das Abspannseil 106a vom Boden ins Turminnere erstrecken und im Turminneren wieder in Richtung Boden umgelenkt werden. Die Öffnungen 516a können z.B.

durch ihre Form oder Größe so ausgebildet sein, dass eine Beweglichkeit des Abspannseils 106a oder ein Zugang der Abspannseils 106a in das Turminnere möglichst nicht beschränkt wird. Die Öffnungen 516a können derart ausgebildet sein, dass z.B. das Turminnere abgedichtet wird.

Durch die Öffnungen können Umlenkstrukturen im Inneren des Turmes angeordnet werden. Durch die Anordnung der Umlenkstrukturen im Turminneren können die Umlenkstrukturen oder die Umlenkanordnung 520 vor äußeren Einflüssen, wie z.B. auftretende Nässe bei einer schlechten Witterung geschützt werden. Auch Abschnitte des Abspannseils, wie z.B. der Abschnitt des Abspannseils, der durch die Umlenkung verformt wird, können durch die Umlenkung im Turminneren geschützt werden.

In anderen Beispielen können Umlenkstrukturen an einer Außenwand des Turmes 102 angeordnet sein. Die Anordnung der Umlenkstrukturen an einer Außenwand kann beispielsweise aufgrund einer einfacheren Anbringung am Turm bevorzugt werden. Umlenkelemente an einer Außenwand können verwendet werden, um Abspannseile mit einer größeren Entfernung von der Turmachse umzulenken zu können. Umlenkelemente an einer Außenwand können z.B. hinsichtlich einer Form, Größe oder Kontaktfläche anders ausgebildet sein als Umlenkstrukturen für eine Turminnenwand.

Umlenkstrukturen können über eine Schweißverbindung mit der Turmwand verbunden sein. In anderen Beispielen können Umlenkstrukturen an eine Turmwand geklebt, verdrahtet, eingehakt, verschraubt oder vernietet sein.

Wie im Ausführungsbeispiel in Fig. 1 in Verbindung mit Fig. 2 gezeigt, können sich zwei verschiedene Abspannseile, wie z.B. Abspannseile 106a und 106b, zu einem gemeinsamen Bereich in Richtung Boden erstrecken. Beispielsweise können das erste Abspannseil 106a und das zweite Abspannseil 106b in einer Entfernung von weniger als 1m, wie z.B. 0,5m, 0,3m oder 0,1m, an einer Fundamentstruktur 105 (z.B. Ankerpunkt oder Abspannstruktur) im Boden befestigt sein oder umgelenkt werden. In einem anderen Beispiel können Abspannseile mittels einzelner Fundamentstrukturen, z.B. aus Beton, die oberhalb des Gelände-Baugrundes angeordnet sind, gespannt werden. Die durch die Fundamentstrukturen aufgenommenen Kräfte können in den Erdboden weitergeleitet werden.

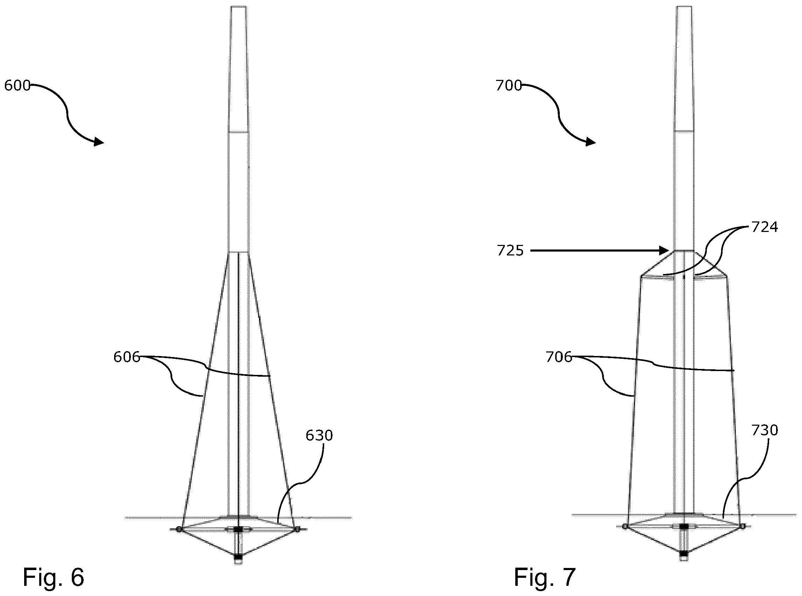

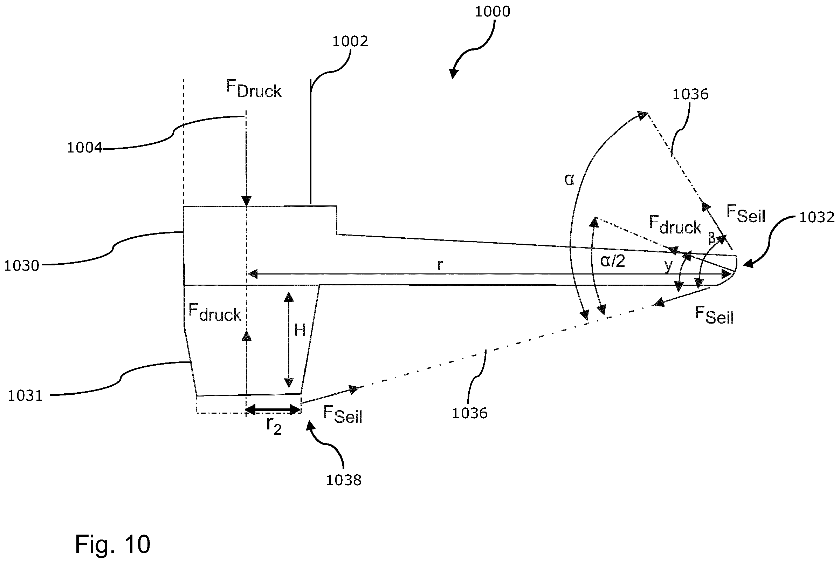

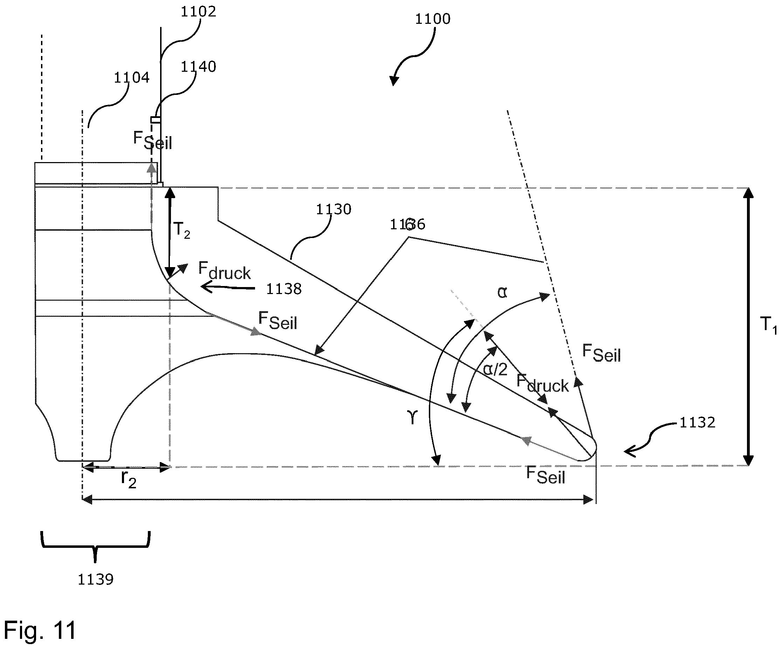

Anstelle einer Befestigung der Abspannseile 106a-b an einzelnen Fundamentstrukturen 105 kann beispielsweise auch eine Umlenkung der Abspannseile 106a-b am Fundament erfolgen. Fig. 6 zeigt ein Ausführungsbeispiel eines Turmbauwerks 600 mit einer Umlenkung der Abspannseile 606 an einem Fundament 630 im Boden. Weitere Details zu der Umlenkung der Abspannseile am Fundament werden weiter unten im Zusammenhang mit den Fig. 10 und 11 ausgeführt.

Fig. 7 zeigt ein Ausführungsbeispiel eines Turmbauwerk 700 mit Umlenkelementen 724. Das Turmbauwerk 700 umfasst Umlenkstrukturen, die am oder im Turm in einer Höhe 725 ausgebildet sind. Die Umlenkelemente 724 sind mit einer Außenseite der Turmwand verbunden und in geringerer Höhe als die Höhe 725 der Umlenkstruktur am Turm angeordnet. Über das Umlenkelement 724 erstreckt sich das Abspannseil 706 in die erste Abspannrichtung zur Umlenkstruktur oder das Abspannseil 706 erstreckt sich von der zweiten Abspannrichtung der Umlenkstruktur über das Umlenkelement 724 in Richtung Boden. Das Umlenkelement 724 ist ausgebildet, um eine Zugkraft des Abspannseils 706 zumindest teilweise in eine auf den Turm wirkende Druckkraft zu übertragen. Beispielsweise kann das Umlenkelemente 724 ein Spant oder eine Strebe sein. Die Länge des Umlenkelements 724 kann beispielsweise kleiner als der Abstand zwischen dem Radius der Turmaußenwand und dem Radius des Fundaments 730 sein. Die Umlenkelemente 724 können eine Aufteilung der in den Turm einwirkenden Druckkräfte bewirken. Durch die Umlenkelemente 724 kann der Turm bzw. die Turmwand auch Druckkräfte in einer niedrigeren Höhe als der Höhe 725 der Umlenkelemente 724 aufnehmen.

Die Umlenkelemente 724 können eine effektive Abspannung des Turmbauwerks 700 mit kleinerem Radius um die Turmachse ermöglichen. Damit können beispielsweise Abspannseile mit einem kleineren Radius am Boden befestigt, gespannt oder umgelenkt werden. Ferner kann die Wirkung aus Seilvorspannung bei einem reduziertem Abspannradius erhöht werden. Durch eine Abspannung mit einem kleineren Radius kann die Befestigung oder Umlenkung an einer Fundamentstruktur oder am Fundament einfacher erfolgen. Ein kleinerer Abspannradius kann bedeuten, dass ein geringerer Flächenbedarf für die Abspannung des Turmbauwerks benötigt wird. Durch den geringeren Flächenverbrauch kann eine Einschränkung auf eine landwirtschaftliche Nutzung reduziert oder vermieden werden. Durch einen geringeren Flächenverbrauch können sich Anforderungen an eine Geländetopologie z.B. für die Installation des Turmbauwerks reduzieren.

Weitere Einzelheiten und optionale Aspekte des Turmbauwerks 600 oder 700 sind in Verbindung mit dem vorgeschlagenen Konzept oder einem oder mehreren der zuvor oder im Folgenden beschriebenen Beispiele beschrieben.

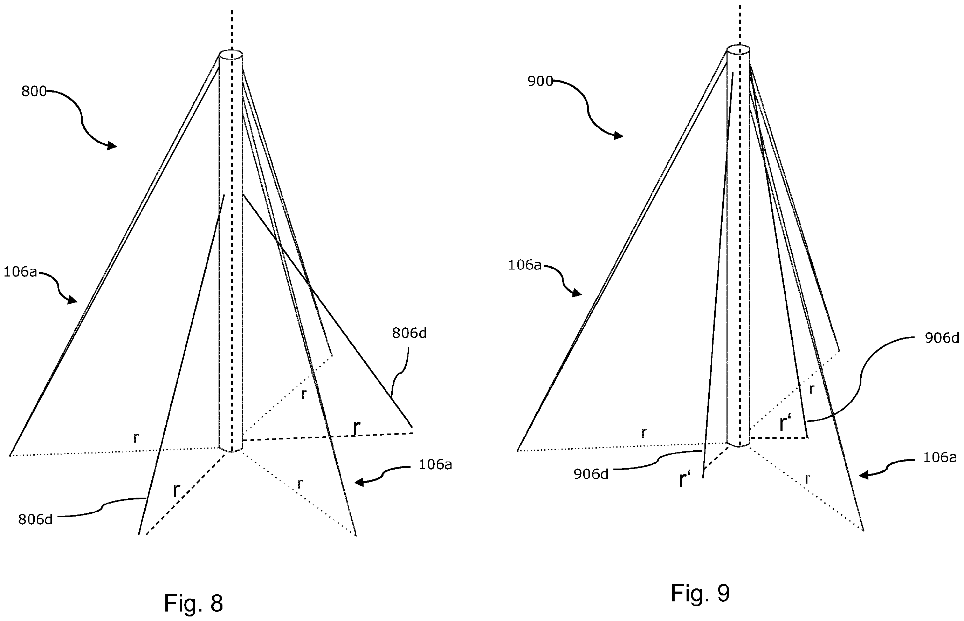

Fig. 8 zeigt ein weiteres Ausführungsbeispiel eines Turmbauwerks 800 mit einem weiteren Abspannseil 806d an einer anderen Abspannhöhe als das Abspannseil 106a. Das Abspannseil 106a erstreckt sich von einer Abspannhöhe des Turms in Richtung Boden. Das weitere Abspannseil 806d erstreckt sich von einer zweiten Abspannhöhe in Richtung Boden. Beispielsweise unterscheidet sich die (erste) Abspannhöhe des (ersten) Abspannseils 106a von der zweiten Abspannhöhe des Weiteren (zweiten) Abspannseils 806d um mehr als 2m. Der Unterschied zwischen den Abspannhöhen kann z. B. 3m, 4m, 5m, 10m, 20m oder mehr betragen. Eine Umlenkung von Abspannseilen an verschiedenen Abspannhöhen kann dazu beitragen, dass eine Druckkraft auf die Turmwand an unterschiedlichen Turmabschnitten einwirkt, um z.B. die Last auf die Turmwand zu verteilen. Für ein Turmbauwerk mit unterschiedlichen Abspannhöhen können beispielsweise mehrere Umlenkstrukturen 210a-c, 310, 410 oder mehrere Umlenkanordnungen 520 wie in den Fig. 2-5 gezeigt ist, verwendet werden. Die Umlenkstrukturen können von der gleichen Art oder unterschiedlich ausgebildet sein.

Weitere Einzelheiten und optionale Aspekte des Turmbauwerks 800 sind in Verbindung mit dem vorgeschlagenen Konzept oder einem oder mehreren der zuvor oder im Folgenden beschriebenen Beispiele beschrieben.

Fig. 9 zeigt weiteres Ausführungsbeispiel eines Turmbauwerks 900 mit einem weiteren Abspannseil 906d mit einem anderen Abspannradius $r_2$ als das Abspannseil 106a. Das Abspannseil 106a erstreckt sich vom Turm in Richtung Boden mit einem Abspannradius r. Das weitere Abspannseil 906d erstreckt sich vom Turm in Richtung Boden mit einem anderen Abspannradius r'. Beispielsweise unterscheidet sich der (erste) Abspannradius r des (ersten) Abspannseils 106a von dem Abspannradius r' des weiteren (zweiten) Abspannseils 906d um mehr als 0,5m, mehr als 1m, mehr als 2m oder mehr als 3m. Eine Befestigung oder Umlenkung von Abspannseilen an verschiedenen Abspannradien kann eine andere Krafteinwirkung oder -übertragung auf die Turmwand z.B. durch einen steileren Kraftverlauf ermöglichen. Für eine effektivere Abspannung kann z.B. das Turmbauwerk 900 zusätzlich mit Abspannseilen mit einem kleineren oder größeren Abspannradius r' als r stabilisiert werden.

In einem anderen Ausführungsbeispiel können Turmbauwerke Abspannseile mit unterschiedlichen Abspannradien und Abspannhöhen umfassen. Beispielsweise kann sich ein erstes Abspannseil unterhalb eines zweiten Abspannseils erstrecken, indem sich beide Abspannseile überkreuzen. In einem anderen Beispiel kann sich ein erstes Abspannseil mit einen anderen Abspannradius und/oder einer anderen Abspannhöhe unterhalb eines zweiten Abspannseils vom Boden in Richtung Turm erstrecken.

Seilabspannungen können vor allem bei hohen Türmen oder Masten verwendet werden und können eine schlanke Konstruktion des Turmbauwerks ermöglichen. Wie in Fig. 1 gezeigt, kann ein Turmbauwerk im Grundriss nach drei Richtungen mit einem gegenseitigen Winkel von

$$\frac{360°}{n} = 120°$$

, mit n als Anzahl der Abspannrichtungen, und im Aufriss im Allgemeinen mehrfach abgespannt werden. Mit zunehmender Abspannhöhe kann sich der Abstand der Abspannbereiche 105 an einer Fundamentstruktur vergrößern.

Weitere Ausführungsbeispiele von Turmbauwerken können von den gezeigten Figuren abweichen. Zum Bespiel kann ein Turmbauwerk 4, 5, 6 oder mehr Abspannseile in verschiedene Abspannrichtungen umfassen. Das Turmbauwerk kann symmetrisch oder auch asymmetrisch abgespannt werden, um z.B. eine bessere Lastverteilung zu ermöglichen.

Weitere Einzelheiten und optionale Aspekte des Turmbauwerks 100 sind in Verbindung mit dem vorgeschlagenen Konzept oder einem oder mehreren der zuvor oder im Folgenden beschriebenen Beispiele beschrieben.

In der nachfolgenden Beschreibung werden Turmbauwerke im Zusammenhang mit Fundamenten näher ausgeführt.

Einige Ausführungsbeispiele beziehen sich auf Turmbauwerke. Das Turmbauwerk umfasst einen Turm entlang einer senkrechten Turmachse und ein Fundament zum Tragen des Turmes, wobei der Turm auf dem Fundament steht. Das Fundament weist einen äußeren Kraftumlenkbereich auf, der einen radialen Abstand von der Turmachse aufweist. Ferner umfasst das Turmbauwerk eine erste Abspannstruktur. Die erste Abspannstruktur erstreckt sich von dem äußeren Kraftumlenkbereich zu einem Teil des Turms oberhalb des Fundaments. Die erste Abspannstruktur oder eine mit der ersten Abspannstruktur an dem äußeren Kraftumlenkbereich gekoppelte, zweite Abspannstruktur erstreckt sich von dem äußeren Kraftumlenkbereich zu einem inneren Abspannbereich unterhalb des äußeren Kraftumlenkbereichs. Ein radialer Abstand des inneren Abspannbereichs von der Turmachse ist kleiner als der radiale Abstand des äußeren Kraftumlenkbereichs.

Das Fundament kann eine Gewichtskraft oder zumindest einen Teil der Gewichtskraft des Turms aufnehmen und in den Boden einleiten. Das Fundament kann mit dem Turm gekoppelt sein und eine vertikale Ausrichtung des Turms entlang der Turmachse ermöglichen. Das Turmbauwerk kann über die Abspannstruktur(en) abgespannt werden, um eine Biegebeanspruchung des Turms reduzieren zu können. Die Abspannstruktur kann eine Zugkraft aufnehmen. Die Zugkraft an der ersten Abspannstruktur optional gekoppelt mit der zweiten Abspannstruktur kann über den äußeren Kraftumlenkbereich des Fundaments umgelenkt werden. Am äußeren Kraftumlenkbereich kann die erste Abspannstruktur umgelenkt werden oder die erste Abspannstruktur kann mit der zweiten Abspannstruktur gekoppelt werden, sodass sich zumindest eine Abspannstruktur vom Turm oberhalb des Fundaments in Richtung unterhalb des Fundaments zum inneren Abspannbereich erstrecken kann. Der innere Abspannbereich kann eine Befestigung, Spannung oder Umlenkung der ersten oder zweiten Abspannstruktur unterhalb des Fundaments ermöglichen. Die Befestigung, Spannung oder Umlenkung der Abspannstruktur am inneren Abspannbereich kann, vergleichsweise mit dem äußeren Kraftumlenkbereich, näher zur Turmachse erfolgen. Durch die Kraftumlenkung am äußeren Kraftumlenkbereich und den inneren Abspannbereich kann die in der Abspannstruktur wirkende Zugkraft als Druckkraft in das Fundament oder in eine Vorrichtung gekoppelt mit dem Fundament eingeleitet werden. Für die Umwandlung der Zugkraft in die Druckkraft kann beispielsweise der innere Abspannbereich am Fundament oder an der Vorrichtung gekoppelt mit dem Fundament ausgebildet sein. Die Kraftumlenkung bzw. Kraftumwandlung kann eine effektive Abspannung des Turms mit einem kleineren Abspannradius ermöglichen. Über den äußeren Kraftumlenkbereich kann ein maximaler Abspannradius auf den radialen Abstand des äußeren Kraftumlenkbereichs begrenzt werden. Ein kleinerer Abspannradius kann einen Platzbedarf des Turmbauwerks reduzieren. Ein kleinerer Platzbedarf kann Kosten für die Sicherung des Turmbauwerks senken oder Ansprüche an die Geländetopologie des Turmbauwerks reduzieren.

Das Fundament kann ein beliebiges Objekt sein, das sich zum Tragen des Turms eignet. Das Fundament kann z.B. aus Stahlbeton gefertigt sein. Das Fundament kann in einer Aufsicht, die z.B. senkrecht zur Turmachse ausgerichtet ist, kreisförmig oder eckig sein oder mehrere Arme umfassen. Mehrere Arme können z. B. ein kreuzförmiges oder sternförmiges Fundament bilden.

Das Fundament kann an seiner äußeren Begrenzung oder am äußeren Rand den äußeren Kraftumlenkbereich aufweisen. Der äußere Kraftumlenkbereich kann z.B. durch eine spezifische Form des äußeren Rands des Fundaments ausgebildet sein. Der äußere Kraftumlenkbereich kann z.B. durch eine Abrundung, eine Vertiefung, eine Ausbuchtung, eine Erhöhung oder eine zusätzliche Vorrichtung am äußeren Rand des Fundaments ausgebildet sein. Eine zusätzliche Vorrichtung kann beispielsweise einer Befestigungsvorrichtung oder einem Element zum Koppeln der ersten und zweiten Abspannstruktur sein. Der äußere Kraftumlenkbereich kann den Kräfteverlauf in der Abspannstruktur und im Fundament bestimmen.

Der innere Abspannbereich kann sich unterhalb des Fundaments und optional zusätzlich unterhalb des Turms befinden. Der innere Abspannbereich kann ein Teil des Fundaments sein, der einen kleineren radialen Abstand von der Turmachse aufweist als der radiale Abstand des äußeren Kraftumlenkbereichs. Der innere Abspannbereich kann ein Teil einer beliebigen Struktur sein, sofern sich der innere Abspannbereich unterhalb des Fundaments und mit einem kleineren radialen Abstand als der radiale Abstand des Fundaments befindet. Der innere Abspannbereich ist z.B. eine Befestigungsvorrichtung zum Befestigen der Abspannstruktur am Fundament, eine Vertiefung, eine Ausbuchtung, eine Erhöhung oder eine Abrundung zum Verbinden, Umlenken, Wickeln der Abspannstruktur mit dem/am/um das Fundament oder einer beliebigen Vorrichtung unterhalb des Fundaments.

Der radiale Abstand des äußeren Kraftumlenkbereichs kann beispielsweise mehr als 10m, mehr als 20m, mehr als 30m und/oder weniger als 50m, weniger als 30m oder weniger als 20m betragen. Der innere Abspannbereich kann beispielsweise auf den radialen Abstand des äußeren Kraftumlenkbereichs abgestimmt sein und beispielsweise einen radialen Abstand von weniger als 5m, weniger als 10m, weniger als 15m betragen. Der innere Abspannbereich kann beispielsweise eine Tiefe von mehr als 1m, mehr als 1,5m, mehr als 2m relativ zum äußeren Kraftumlenkbereich aufweisen.

Die Abspannstruktur kann eine Zugkraft aufnehmen und ermöglichen, dass die aufgenommene Zugkraft auf das Fundament und/oder eine Vorrichtung unterhalb des Fundaments übertragen werden kann. Beispielsweise ist die Abspannstruktur ein Stahlseil, eine Stahlkette oder eine Kombination von miteinander gekoppelten Seilen, Ketten und/oder Stangen. Die Abspannstruktur kann einteilig sein und z.B. durch die erste Abspannstruktur (z. B. ein Abspannseil) gebildet sein. Die Abspannstruktur kann mehrteilig sein und z.B. durch die erste und zweite Abspannstruktur oder weitere Abspannstrukturen gebildet sein. Im Vergleich zu einer einteiligen Abspannstruktur, kann z.B. ein zweiteilige oder mehrteilige Abspannstruktur Abschnitte mit unterschiedlichen Durchmessern, Formen, Strukturen oder Materialien umfassen. Die Abspannstruktur kann am äußeren Kraftumlenkbereich zur Umlenkung verformt oder verbogen werden.

Der Turm kann eine beliebig hohe Einrichtung sein, die sich vom Boden in eine Höhe erstreckt. Weitere Ausführungen zum Turm können wie oben beschrieben sein.

Die Achse des Turms kann senkrecht z.B. zu einer aufgespannten Fläche des Fundaments oder zu einer Fläche zum Aufstellen des Turmes sein. Weitere Ausführungen zur Turmachse können wie oben beschrieben sein.

Für eine effektive Abspannung kann das Turmbauwerk mehr als eine Abspannstruktur, mehr als einen äußeren Kraftumlenkbereich und mehr als einen inneren Abspannbereich umfassen. Beispielsweise kann ein Turmbauwerk zwei, drei oder mehr Abspannstrukturen, äußere Kraftumlenkbereiche und/oder innere Abspannbereiche umfassen. Abspannstrukturen, äu-ßere Kraftumlenkbereiche und innere Abspannbereiche können am oder zum Fundament derart verteilt sein, dass der Turm möglichst gleichmäßig belastet werden kann. Beispielsweise können Abspannstrukturen, äußere Kraftumlenkbereiche und innere Abspannbereiche symmetrisch oder mit einem gleichen Winkel hinsichtlich der Turmachse oder zueinander angeordnet sein. Gemäß einem Beispiel kann ein Turmbauwerk genauso viele Abspannstrukturen wie äußere Kraftumlenkbereiche und/oder innere Abspannbereiche, mehr Abspannstrukturen als äußere Kraftumlenkbereiche und/oder innere Abspannbereiche oder weniger Abspannstrukturen als äußere Kraftumlenkbereiche und/oder innere Abspannbereiche umfassen.

Fig. 10 zeigt ein Ausführungsbeispiel eines Turmbauwerks 1000 mit einem Turm 1002 entlang einer senkrechten Turmachse 1004 und ein (z.B. erstes) Fundament 1030 zum Tragen des Turmes 1002. Der Turm 1002 steht auf dem Fundament 1030. Das Fundament 1030 weist einen äußeren Kraftumlenkbereich 1032 auf, der einen radialen Abstand r von der Turmachse 1004 hat. Ferner weist das Fundament 1030 eine erste Abspannstruktur 1036 auf. Die erste Abspannstruktur 1036 erstreckt sich von dem äußeren Kraftumlenkbereich 1032 zu einem Teil des Turms 1002 oberhalb des Fundaments 1030. Die erste Abspannstruktur 1036 erstreckt sich von dem äußeren Kraftumlenkbereich 1032 zu einem inneren Abspannbereich 1038 unterhalb des äußeren Kraftumlenkbereichs 1032. Der radiale Abstand $r_2$ des inneren Abspannbereichs 1038 ist relativ zur Turmachse 1004 kleiner als der radiale Abstand r des äußeren Kraftumlenkbereichs 1032.

In einem anderen Ausführungsbeispiel ist die erste Abspannstruktur mit einer zweiten Abspannstruktur an dem äußeren Kraftumlenkbereich 1032 gekoppelt, sodass sich die zweite Abspannstruktur von dem äußeren Kraftumlenkbereich 1032 zu dem inneren Abspannbereich 1038 unterhalb des äußeren Kraftumlenkbereichs 1032 erstreckt. In diesem Ausführungsbeispiel können die erste Abspannstruktur und die zweite Abspannstruktur als eine zweiteilige Abspannstruktur 1036 angesehen werden, die sich einerseits von dem äußeren Kraftumlenkbereich 1032 zu einem Teil des Turm 1002 oberhalb des Fundaments 1030 und andererseits sich von dem äußeren Kraftumlenkbereich 1032 zu dem inneren Abspannbereich 1038 unterhalb des äußeren Kraftumlenkbereichs 1032 erstreckt. Im Folgenden wird das Turmbauwerk 1000 im Zusammenhang mit der ersten (einteiligen) Abspannstruktur 1036 betrachtet. Dies dient lediglich zur Vereinfachung und ist nicht als eine Einschränkung für das beschriebene Konzept zu verstehen.

Durch den äußeren Kraftumlenkbereich 1032 kann die Abspannstruktur 1036 am Fundament 1030 umgelenkt werden. Zum Beispiel kann dadurch auf eine Befestigung der Abspannstruktur 1036 am Fundament 1030, am äußeren Teil des Fundaments 1030 oder an einem separaten Verankerungselement außerhalb des Fundamentradius r vermieden werden. Durch den äußere Kraftumlenkbereich 1032 kann die Abspannstruktur 1036 unter das Fundament 1030 geführt werden, sodass eine Kraftumlenkung und eine Einleitung von Druckkräften in das Fundament 1030 erfolgen kann. Da das Fundamentmaterial, wie z.B. Beton höhere Druckkräfte als Zugkräfte aufnehmen kann, kann diese Art der Kraftumlenkung eine effektive Lastverteilung der Abspannkräfte auf das Turmbauwerk 1000 ermöglichen. Zum Beispiel kann das Fundament als Ortbeton- oder Fertigteilfundament oder deren Kombination, ausgebildet sein.

Im Vergleich zu einer Abspannung mit Verankerungselementen außerhalb des Fundamentradius r, kann in dem in Fig. 10 gezeigten Ausführungsbeispiel aufgrund der effektiven Lastumlenkung eine Abspannung mit einem kleineren Abspannradius erfolgen. Kleinere Abspannradien können einen geringeren Platzbedarf für das Turmbauwerk 1000 ermöglichen. Weitere Aspekte hinsichtlich kleinerer Abspannradien können, wie oben beschrieben, im Zusammenhang mit Fig. 7 oder Fig. 9 betrachtet werden.

In Fig. 10 sind beispielhaft Kraftvektoren $F_{Seil}$, die auf die Abspannstruktur 1036 wirken, $F_{Druck}$, die auf den äußeren Kraftumlenkbereich 1032 und auf das Fundament 1030 bzw. 1031 wirken, dargestellt. Die auf die Abspannstruktur 1036 wirkenden Zugkräfte $F_{Seil}$ können durch den äußeren Kraftumlenkbereich 1032 als Druckkraft $F_{Druck}$ und durch den inneren Abspannbereich 1038 effektiv in Form einer Druckkraft auf das Fundament 1030 übertragen werden.

Das Turmbauwerk in Fig. 10 zeigt den inneren Abspannbereich 1038 als einen Teil eines zweiten Fundaments 1031. Das zweite Fundament 1031 befindet sich unterhalb des ersten Fundaments 1030. Das zweite Fundament 1031 kann beispielsweise aus einem anderen Material als das Fundament 1030 gefertigt sein. Das zweite Fundament 1031 kann mit einer geeigneten Befestigungsmethode mit dem Fundament 1030 derart verbunden werden, dass eine geeignete Kraftübertragung auf das Fundament 1030 erfolgen kann.

In einem anderen Ausführungsbeispiel kann das zweite Fundament 1031 vom Fundament 1030 beabstandet sein. Beispielsweise kann sich ein für eine Kraftübertragung geeignetes Material oder Medium zwischen dem Fundament 1030 und dem zweiten Fundament 1031 befinden. Zum Beispiel kann das Material vom Boden stammen und Erde, Kies oder Sand sein. In einem anderen Ausführungsbeispiel kann sich das zweite Fundament 1031 lediglich teilweise unterhalb des Fundaments 1030 befinden. Zum Beispiel können sich Teile des zweiten Fundaments 1031 außerhalb des Fundamentradius r des Fundaments 1030 befinden.

In einem anderen Ausführungsbeispiel kann der innere Abspannbereich 1038 ein Teil des Fundaments 1030 sein. Für diesen Fall ist z.B. das zweite Fundament 1031 ein Teil des Fundaments 1030.

Die von der ersten Abspannstruktur 1036 auf den äußeren Kraftumlenkbereich 1032 übertragene Druckkraft $F_{Druck}$ kann mit einem Winkel Y auf das Fundament 1030 wirken. Der Winkel Y kann dem Winkel zwischen der Druckkraft $F_{Druck}$ am äußeren Kraftumlenkbereich 1032 und der horizontalen Ebene entlang des Fundaments 1030 senkrecht zur Turmachse 1004 einschließen. Für eine effektive Lastumlenkung kann der Winkel Y mindestens 15° und maximal 30° betragen. Zum Beispiel kann der Winkel Y 15°, 16°, 20°, 25° oder 30° betragen. Beispielsweise kann der Winkel Y über die Höhe H bestimmt werden. Die Höhe H kann der Tiefe bzw. dem Abstand des inneren Abspannbereichs 1038 relativ zu einem Arm des Fundaments 1030 entsprechen. Die Höhe H kann beispielsweise über die Beziehung $H = \tan(\beta - 2\Upsilon) \, r$ bestimmt werden, wobei $\beta$, wie in Fig. 10 dargestellt, den Winkel zwischen der Seilkraft $F_{Seil}$ und der horizontalen Ebene einschließt. Beispielsweise kann die Höhe H zwischen dem inneren Abspannbereich und dem Fundament 1030 1m oder mehr betragen.

Gemäß einem anderen Ausführungsbeispiel umfasst ein Turmbauwerk das Fundament 1030 mit einem zweiten äußeren Kraftumlenkbereich, der von der Turmachse 1004 einen zweiten radialen Abstand r, hat. Der zweite radiale Abstand r' des zweiten Kraftumlenkbereichs unterscheidet sich dabei von dem (ersten) radialen Abstand r des (ersten) äußeren Kraftumlenkbereichs 1030 um mindestens 20% des (ersten) radialen Abstands r. Von dem zweiten äußeren Kraftumlenkbereich erstreckt sich eine weitere Abspannstruktur zu einem Teil des Turms 1002 oberhalb des Fundaments 1030. Durch einen zweiten äußeren Kraftumlenkbereich mit einem radialen Abstand r' verschieden von dem radialen Abstand r des (ersten) äußeren Kraftumlenkbereichs 1032, kann eine Abspannung des Turmbauwerks 1000 mit unterschiedlichen Abspannradien erfolgen. Wie auch in Zusammenhang mit Fig. 7 und Fig. 9 beschrieben, können Turmbauwerke mit unterschiedlichen Abspannradien eine andere Kraftübertagung oder -verteilung auf die Turmwand begünstigen.

In dem in Fig. 10 gezeigten Turmbauwerk 1000, kann die erste Abspannstruktur 1036 ein Abspannseil sein, das sich von dem Turm 1002 über den äußeren Kraftumlenkbereich 1032 zu dem inneren Abspannbereich 1038 erstreckt. Weitere Beispiele für Abspannstrukturen 1036 sind Ketten, Stangen oder andere Elemente, die sich dazu eignen, eine aufgenommene Zugkraft in eine auf den äußeren Kraftumlenkbereich 1032 wirkende Druckkraft zu übertragen. Abspannstrukturen können sich hinsichtlich Art, Material, Form oder Durchmesser unterscheiden oder einteilig oder auch mehrteilig sein. Zum Beispiel ist eine Abspannstruktur eine Kombination aus einem ersten Abspannseil, das einen ersten Durchmesser aufweist und sich oberhalb des Fundaments erstreckt und einem zweiten Abspannseil, das einen zweiten Durchmesser aufweist und sich unterhalb des Fundaments erstreckt. Beispielsweise kann ein Abspannseil aus Stahl sein und eine Dicke von 40-120mm haben. Ein Abspannseil aus Stahl kann als Litzenseil, beispielsweise als Rundlitzenseil oder als Spirallitzenseil, beispielsweise als halb- oder vollverschlossenes Spiralseil ausgeführt sein. Alternativ kann das Abspannseil aus Stahl als dehnungsarmes oder elektromechanisches Seil ausgeführt sein.

Der innere Abspannbereich 1038 kann mit einer Verbindungs- oder Umlenkvorrichtung am Fundament 1031 für das Verbinden bzw. Umlenken der Abspannstruktur 1036 mit/am Fundament 1038 ausgestattet sein. Die Abspannstruktur 1036 kann beispielsweise mittels einer Schraube, einer Röhre, einer Schlaufe, eine Umwicklung, einem Haken, einem Flansch, oder einer anderen Vorrichtung zum Befestigen, Spannen oder Koppeln der Abspannstruktur mit dem Fundament 1031 verbunden sein. Alternativ kann die Abspannstruktur 1036 über einen weiteren Kraftumlenkbereich am Fundament 1031 in Richtung Turm 1002 umgelenkt werden. Durch die Umlenkung kann die Abspannstruktur 1036 zum Beispiel mit dem Turm 1002 gekoppelt werden. Dadurch kann eine zu übertragende Kraft z.B. in die Turmwand eingeleitet werden.

Weitere Einzelheiten und optionale Aspekte des Turmbauwerks 1000 sind in Verbindung mit dem vorgeschlagenen Konzept oder einem oder mehreren der zuvor oder im Folgenden beschriebenen Beispiele beschrieben.

Einige Ausführungsbeispiele beziehen sich auf Turmbauwerke. Ein Turmbauwerk umfasst einen Turm entlang einer senkrechten Turmachse und ein Fundament zum Tragen des Turmes, wobei der Turm auf dem Fundament steht. Das Fundament weist einen äußeren Kraftumlenkbereich auf, der außerhalb einer Grundfläche des Turms liegt. Ferner umfasst das Turmbauwerk eine Abspannstruktur, die sich von einer Außenseite des Turms zu dem äußeren Kraftumlenkbereich erstreckt und von dem äußeren Kraftumlenkbereich durch eine Öffnung im Fundament von unterhalb des Turms zu einer Befestigungsstruktur im Turminneren erstreckt.

Das Fundament kann eine Gewichtskraft oder zumindest einen Teil der Gewichtskraft des Turms aufnehmen und in den Boden einleiten. Das Fundament kann mit dem Turm gekoppelt sein und eine vertikale Ausrichtung des Turms entlang der Turmachse ermöglichen. Das Turmbauwerk kann über die Abspannstruktur abgespannt werden, um eine Biegebeanspruchung des Turms reduzieren zu können. Die Abspannstruktur kann eine Zugkraft aufnehmen. Die Zugkraft an der Abspannstruktur kann über den äußeren Kraftumlenkbereich des Fundaments umgelenkt werden. Am äußeren Kraftumlenkbereich kann die Abspannstruktur umgelenkt werden, sodass sich die Abspannstruktur von der Turmaußenseite oberhalb des Fundaments in Richtung unterhalb des Fundaments durch die Öffnung im Fundament zur Befestigungsstruktur im Turminneren erstrecken kann. Die Befestigungsstruktur kann eine Kopplung der Abspannstruktur mit dem Turminneren, z.B. mit der Turminnenwand ermöglichen. Durch die Kraftumlenkung am äußeren Kraftumlenkbereich und der Befestigungsstruktur im Turminneren kann die in der Abspannstruktur wirkende Zugkraft als Druckkraft in das Fundament eingeleitet werden. Zudem kann die von der Abspannstruktur übertragene Kraft in das Turminnere einwirken. Die Kraftumlenkung bzw. Kraftumwandlung kann eine effektive Abspannung des Turms mit einem kleineren Abspannradius ermöglichen. Über den äußeren Kraftumlenkbereich kann ein maximaler Abspannradius auf den radialen Abstand des äußeren Kraftumlenkbereichs begrenzt werden. Ein kleinerer Abspannradius kann einen Platzbedarf des Turmbauwerks reduzieren. Ein kleinerer Platzbedarf kann Kosten für die Sicherung des Turmbauwerks senken oder Ansprüche an die Geländetopologie des Turmbauwerks reduzieren.

Das Fundament kann ein beliebiges Objekt sein, das sich zum Tragen des Turms eignet. Das Fundament kann z.B. aus Stahlbeton gefertigt sein. Das Fundament kann in einer Aufsicht, die z.B. senkrecht zur Turmachse ausgerichtet ist, kreisförmig oder eckig sein oder mehrere Arme umfassen. Mehrere Arme können z. B. ein kreuzförmiges oder sternförmiges Fundament bilden. Das Fundament kann eine Öffnung aufweisen, durch die sich die Abspannstruktur von unterhalb des Fundaments in Richtung Turminneres erstrecken kann. Die Öffnung kann z.B. rund sein, eckig sein oder rohrförmig sein. Die Öffnung kann die Turmachse umfassen oder von der Turmachse verschoben sein. Die Öffnung im Fundament kann als Hohlraum ausgebildet sein, der für eine Anordnung von z.B. Anlagen oder Vorrichtungen genutzt werden kann.

Das Fundament kann an seiner äußeren Begrenzung oder am äußeren Rand den äußeren Kraftumlenkbereich aufweisen. Der äußere Kraftumlenkbereich kann außerhalb einer Grundfläche des Turms, z.B. dem Aufstellbereich des Turms oder der Fläche begrenzt durch eine Außenwand des Turms, liegen. Der äußere Kraftumlenkbereich kann z.B. durch eine spezifische Form des äußeren Rands des Fundaments ausgebildet sein. Der äußere Kraftumlenk-bereich kann z.B. durch eine Abrundung, eine Vertiefung, eine Ausbuchtung, eine Erhöhung oder eine zusätzliche Vorrichtung am äußeren Rand des Fundaments ausgebildet sein. Eine zusätzliche Vorrichtung kann beispielsweise eine Befestigungsvorrichtung oder ein Element zum Koppeln einer zwei- oder mehrteiligen Abspannstruktur sein. Der äußere Kraftumlenkbereich kann beispielsweise durch seine Position, seine Form oder seine Struktur den Kräfteverlauf in der Abspannstruktur und im Fundament bestimmen.

Die Befestigungsstruktur kann sich in der Turminnenseite, wie z.B. an der Turminnenwand befinden. Der innere Abspannbereich kann ein Teil der Turmstruktur, wie z.B. ein Flansch sein oder eine beliebige Vorrichtung zum Koppeln der Abspannstruktur mit dem Turminneren (z.B. einer Innenseite der Turmwand) sein. Die Befestigungsstruktur kann sich oberhalb des Fundaments befinden und einen kleineren radialen Abstand von der Turmachse als der radiale Abstand des äußeren Kraftumlenkbereichs aufweisen. Der radiale Abstand des äußeren Kraftumlenkbereichs kann beispielsweise mehr als 10m, mehr als 20m, mehr als 30m oder mehr betragen. Die Befestigungsvorrichtung kann z.B. die Umlenkstruktur gemäß den oben beschriebenen Ausführungen sein. Die Befestigungsvorrichtung kann eine Vertiefung, eine Ausbuchtung, eine Erhöhung, eine Öffnung oder eine Abrundung zum Verbinden oder Umlenken der Abspannstruktur mit dem/am Turminneren sein.

Die Abspannstruktur kann eine Zugkraft aufnehmen und ermöglichen, dass die aufgenommene Zugkraft auf das Fundament und mittels der Befestigungsstruktur in das Turminnere übertragen werden kann. Beispielsweise ist die Abspannstruktur ein Stahlseil, eine Stahlkette oder eine Kombination von miteinander gekoppelten Stangen. Die Abspannstruktur kann einteilig sein und z.B. durch die erste Abspannstruktur gebildet sein. Die Abspannstruktur kann mehrteilig sein und z.B.

durch die erste und zweite Abspannstruktur oder weitere Abspannstrukturen gebildet sein. Im Vergleich zu einer einteiligen Abspannstruktur, kann z.B. ein zweiteilige oder mehrteilige Abspannstruktur Abschnitte mit unterschiedlichen Durchmessern, Formen, Strukturen oder Materialien umfassen. Die Abspannstruktur kann zumindest am äußeren Kraftumlenkbereich verformt werden.

Der Turm kann eine beliebig hohe Einrichtung sein, die sich vom Boden in eine Höhe erstreckt. Weitere Ausführungen zum Turm können wie oben beschrieben sein.

Die Achse des Turms kann senkrecht z.B. zu einer aufgespannten Fläche des Fundaments oder zu einer Fläche zum Aufstellen des Turmes sein. Weitere Ausführungen zur Turmachse können wie oben beschrieben sein.

Für eine effektive Abspannung kann das Turmbauwerk mehr als eine Abspannstruktur, mehr als einen äußeren Kraftumlenkbereich und mehr als eine Befestigungsstruktur umfassen. Beispielsweise kann ein Turmbauwerk zwei, drei oder mehr Abspannstrukturen, äußere Kraftumlenkbereiche und/oder Befestigungsstrukturen umfassen. Abspannstrukturen, äußere Kraftumlenkbereiche und Befestigungsstrukturen können am oder zum Fundament derart verteilt sein, dass der Turm möglichst gleichmäßig belastet werden kann. Beispielsweise können Abspannstrukturen, äußere Kraftumlenkbereiche und Befestigungsstrukturen symmetrisch oder mit einem gleichen Winkel hinsichtlich der Turmachse oder zueinander angeordnet sein. Gemäß einem Beispiel kann ein Turmbauwerk genauso viele Abspannstrukturen wie äußere Kraftumlenkbereiche und/oder Befestigungsstrukturen, mehr Abspannstrukturen als äußere Kraftumlenkbereiche und/oder Befestigungsstrukturen oder weniger Abspannstrukturen als äußere Kraftumlenkbereiche und/oder Befestigungsstrukturen umfassen.

Fig. 11 zeigt ein weiteres Ausführungsbeispiel eines Turmbauwerk 1100 mit einem Turm 1102 entlang einer senkrechten Turmachse 1104 und einem Fundament 1130 zum Tragen des Turmes 1102. Der Turm 1102 steht auf dem Fundament 1130. Das Fundament 1130 weist einen äußeren Kraftumlenkbereich 1132 auf, der außerhalb einer Grundfläche des Turms 1102 liegt. Das Turmbauwerk 1100 umfasst eine Abspannstruktur 1136, die sich von einer Außenseite des Turms 1102 zu dem äußeren Kraftumlenkbereich 1132 erstreckt und von dem äußeren Kraftumlenkbereich 1132 durch eine Öffnung 1139 im Fundament 1130 von unterhalb des Turms 1102 zu einer Befestigungsstruktur 1140 im Turminneren erstreckt.

Durch den äußeren Kraftumlenkbereich 1132 kann die Abspannstruktur 1136 am Fundament 1130 umgelenkt werden. Zum Beispiel kann dadurch eine Befestigung der Abspannstruktur 1136 am Fundament 1130, am äußeren Teil des Fundaments 1130 oder an einem separaten Verankerungselement außerhalb des Fundamentradius r vermieden werden. Durch den äußeren Kraftumlenkbereich 1132 kann die Abspannstruktur 1136 unter das Fundament 1130 geführt werden, sodass eine Kraftumlenkung und eine Einleitung von Druckkräften in das Fundament 1130 erfolgen kann. Da das Fundamentmaterial, wie z.B. Beton, höhere Druckkräfte als Zugkräfte aufnehmen kann, kann diese Art der Kraftumlenkung eine effektive Lastverteilung der Abspannkräfte auf das Turmbauwerk 1100 ermöglichen.

Im Vergleich zu einer Abspannung mit Verankerungselementen außerhalb des Fundamentradius r, kann aufgrund einer effektiveren Lastumlenkung im Turmbauwerk 1100 eine Abspannung mit einem kleineren Abspannradius erfolgen. Aspekte zu kleineren Abspannradien können sich auf die Ausführungen im Zusammenhang mit Fig. 7, 9 und 10 beziehen.

Im Vergleich zu Fig. 10, weist das Turmbauwerk 1100 keinen inneren Abspannbereich auf, der sich unterhalb des äußeren Kraftumlenkbereich 1132 befindet. Im Turmbauwerk 1100 wird die Abspannstruktur 1136 im Turminneren an eine Befestigungsstruktur 1140 gekoppelt, sodass eine über die Abspannstruktur 1136 übertragene Kraft z.B. in eine Turmstruktur eingeleitet werden kann. Beispielsweise ist die Befestigungsstruktur 1140 an der Turmwand des Turms 1102 oder einem Querflansch oder Längsflansch des Turms 1102 befestigt.

Das Turmbauwerk 1100 weist einen inneren Kraftumlenkbereich 1138 auf, über den die Abspannstruktur 1136 ins Turminnere geführt wird. Wie in Fig. 11 gezeigt, erstreckt sich die Abspannstruktur 1136 von dem äußeren Kraftumlenkbereich 1132 über den inneren Kraftumlenkbereich 1138 zur Befestigungsstruktur 1140. Der äußere Kraftumlenkbereich 1132 weist einen ersten radialen Abstand r von der Turmachse 1104 auf und ist in einer ersten Tiefe $T_1$ angeordnet. Der innere Kraftumlenkbereich 1138 weist einen zweiten radialen Abstand $r_2$ von der Turmachse 1104 auf und ist in einer zweiten Tiefe $T_2$ angeordnet. Dabei ist der zweite radiale Abstand $r_2$ kleiner als der erste radiale Abstand r und die erste Tiefe $T_1$ ist größer als die zweite Tiefe $T_2$. Beispielsweise ist die erste Tiefe $T_1$ des äußeren Kraftumlenkbereichs 1132 um mindestens 1m größer als die zweite Tiefe $T_2$ des inneren Kraftumlenkbereichs 1138. Die Tiefe $T_1$ des äußeren Kraftumlenkbereichs 1132 ist zum Beispiel 1m, 2m, 3m, 5m größer als die zweite Tiefe $T_2$ des inneren Kraftumlenkbereichs 1138.

Durch den inneren Kraftumlenkbereich 1138 kann eine geeignete Kraftübertragung von der Abspannstruktur 1136 auf das Fundament 1130 erfolgen. In Fig. 11 sind beispielhaft Kraftvektoren $F_{Seil}$, die auf die Abspannstruktur 1136 wirken und $F_{Druck}$, die auf den äußeren Kraftumlenkbereich 1132 und den inneren Kraftumlenkbereich 1138 des Fundaments 1130 wirken, dargestellt. Die auf die Abspannstruktur 1136 wirkende Zugkraft $F_{Seil}$ kann durch den äußeren Kraftumlenkbereich 1132 und den inneren Kraftumlenkbereich 1138 als Druckkraft $F_{Druck}$ effektiv auf das Fundament 1030 übertragen werden. Der Kräfteverlauf kann abhängig von den

Radien r und $r_2$ und den Tiefen $T_1$ und $T_2$ und dem Verhältnis zueinander anders als dargestellt ausgebildet sein.

Die Richtung der Druckkraft $F_{Druck}$ am äußeren Kraftumlenkbereich 1132 kann durch den Winkel Y beschrieben werden. Wie in Fig. 11 gezeigt, bezieht sich der Winkel Y auf eine horizontale Ebene senkrecht zur Turmachse 1104 und beträgt beispielsweise mindestens 30° und maximal 60°. Der Winkel Y kann z.B. 30°, 35°, 40°, 50° oder 60° betragen oder beliebige, für eine Kraftübertragung geeignete Werte annehmen.

Zum Beispiel kann die Abspannstruktur 1136 ein Abspannseil sein. In einem anderen Beispiel kann die Abspannstruktur 1136 von einer beliebigen Art sein, die sich für eine effektive Abspannung von Turmbauwerken eignet. Weitere Beispiele für Abspannstrukturen 1136 können solche sein, die im Zusammenhang mit den Turmbauwerken, z.B. Turmbauwerk 1000, weiter oben beschrieben wurden.

In einem anderen Ausführungsbeispiel weist die Abspannstruktur 1136 ein erstes Abspannseil auf, das sich von der Außenseite des Turms 1102 zu dem äußeren Kraftumlenkbereich 1132 erstreckt. Zudem weist die Abspannstruktur 1136 ein zweites Abspannseil auf, das sich von dem äußeren Kraftumlenkbereich 1132 durch die Öffnung 1139 im Fundament zu der Befestigungsstruktur 1140 erstreckt. In dem genannten Ausführungsbeispiel kann die Abspannstruktur 1136 als eine zweiteilige Abspannstruktur 1136 betrachtet werden. Das erste und zweite Abspannseil können beispielsweise am äußeren Kraftumlenkbereich 1132 miteinander verbunden sein. Die zweiteilige, oder in anderen Beispielen mehrteilige, Abspannstruktur 1136 kann beispielsweise für eine bessere Kraftübertragung auf das Fundament 1130 oder im Allgemeinen für eine bessere Abspannung des Turmbauwerks 1100 bevorzugt werden. Das erste Abspannteil kann sich vom zweiten Abspannseil beispielsweise hinsichtlich einer Seildicke, einer Materialart oder einer Struktur unterscheiden.

In dem in Fig. 11 gezeigten Ausführungsbeispiel, weist das Fundament 1130 einen zentralen Hohlraum unter dem Turm 1102 auf. Der zentrale Hohlraum bildet dabei die Öffnung 1139 im Fundament 1130, durch die sich die Abspannstruktur 1136 erstreckt. Im Allgemeinen kann der Hohlraum beliebig ausgebildet sein, sodass sich die Abspannstruktur 1136 von dem äu-ßeren Kraftumlenkbereich 1132 zu der Befestigungsstruktur 1140 im Turminneren erstrecken kann. Beispielsweise kann eine den Hohlraum aufspannende Grundfläche kreisförmig, rechteckig, quadratisch, trapezförmig, elliptisch oder ringförmig sein. Der Hohlraum kann so groß sein, dass er von anderen Abspannstrukturen gleichzeitig verwendet werden kann. Der Hohlraum kann beispielsweise von der Turmachse 1104 in Richtung des inneren Kraftumlenkbereichs 1138 versetzt sein, sodass der Hohlraum die Turmachse 1104 nicht umfasst. Der Hohlraum kann beispielsweise kleiner als abgebildet dargestellt sein und nur für die Abspannstruktur 1136 ausgebildet sein. Weitere Hohlräume können im Fundament 1130 für weitere Abspannstrukturen ausgebildet sein.

Gemäß einem Ausführungsbeispiel kann das Turmbauwerk 1100 eine Vorrichtung oder Betriebsanlage umfassen, die in dem zentralen Hohlraum angeordnet ist. Für diesen Fall kann beispielsweise der zentrale Hohlraum als Fundamentkeller bezeichnet werden. Die Vorrichtung oder Betriebsanlage kann im Hohlraum untergebracht oder gelagert werden. Beispiele für Vorrichtungen oder Betriebsanlagen sind z.B. Geräte, Transformatoren, Umrichter, Ersatzteile, Werkzeuge, Kabel, Erste-Hilfe-Ausrüstungen, Anlagen zur Energieversorgung, zur Wartung oder Belüftung.

Zum Beispiel kann der zentrale Hohlraum belüftet sein. Die Belüftung des Hohlraums kann durch eine Belüftungsöffnung durch das Fundament 1130 oder einen Belüftungskanal unterhalb des Fundaments 1130 erfolgen. Durch die Belüftungsöffnung oder den Belüftungskanal kann der Hohlraum klimatisiert werden. Die Belüftungsöffnung kann im Fundament 1130 derart ausgebildet sein, sodass z.B. mittels eines Schlauchs oder Kanals ein Luftstrom von einer äußeren Umgebung des Turmbauwerks 1100 in das Turminnere eingeleitet werden kann. Der Belüftungskanal kann einem Schlauch entsprechen, der vom Hohlraum unterhalb des Fundaments 1130 in Richtung Erdoberfläche geführt wird. Durch die Führung des Belüftungskanals unterhalb des Fundaments 1130 kann die Belüftungsöffnung im Fundament 1130 vermieden werden.

In einem Ausführungsbeispiel weist das Fundament 1130 einen weiteren äußeren Kraftumlenkbereich auf, der von der Turmachse 1104 einen radialen Abstand r' hat, der sich von dem radialen Abstand r des äußeren Kraftumlenkbereichs 1132 um mindestens 20% des radialen Abstands r des äußeren Kraftumlenkbereichs unterscheidet. Dabei erstreckt sich eine weitere Abspannstruktur von einer Außenseite des Turms 1102 zu dem weiteren äußeren Kraftumlenkbereich. Durch den weiteren (z.B. zweiten) äußeren Kraftumlenkbereich mit einem radialen Abstand r' verschieden von dem radialen Abstand r des (ersten) äußeren Kraftumlenkbereichs 1132, kann eine Abspannung des Turmbauwerks 1100 mit unterschiedlichen Abspannradien erfolgen. Wie oben beschrieben, können Turmbauwerke mit unterschiedlichen Abspannradien eine andere Kraftübertagung oder -verteilung auf die Turmwand begünstigen.

Im Allgemeinen können äußere Kraftumlenkbereiche, wie z.B. Kraftumlenkbereich 1032 oder 1132 eine Krümmung mit einem begrenzt zulässigen Krümmungsradius aufweisen. Der doppelte Krümmungsradius, bzw. der Durchmesser der Krümmung kann größer als ein minimaler Biegerollendurchmesser des Abspannseils sein. Die Begrenzung der Krümmung kann auch den inneren Kraftumlenkbereich 1138 betreffen. Die Beschränkung der Kraftumlenkbereiche auf eine maximal zulässige Krümmung kann gewährleisten, dass die Druckfestigkeit von dem Material des Fundaments, wie z.B. Beton, nicht überschritten wird und/oder eine Abspannstruktur durch zu starke Verformung und gleichzeitiger Krafteinwirkung nicht beschädigt wird.

Weitere Einzelheiten und optionale Aspekte des Turmbauwerks 1100 sind in Verbindung mit dem vorgeschlagenen Konzept oder einem oder mehreren der zuvor oder im Folgenden beschriebenen Beispiele beschrieben.

Einige Ausführungsbeispiele beziehen sich auf Fundamente zum Tragen eines Turmes. Das Fundament umfasst einen ersten Arm, der sich bis zu einem maximalen radialen Abstand von einem Mittelpunkt eines Turmaufstellbereichs des Fundaments in eine erste Richtung erstreckt. Ferner umfasst das Fundament einen zweiten Arm, der sich bis zu einem maximalen radialen Abstand von einem Mittelpunkt des Turmaufstellbereichs des Fundaments in eine zweite Richtung erstreckt, wobei sich das Fundament zwischen dem ersten Arm und dem zweiten Arm zumindest bis zu einem minimalen radialen Abstand von dem Mittelpunkt des Turmaufstellbereichs des Fundaments erstreckt, wobei der minimale radiale Abstand mindestens 25% (oder mindestens 35%) und maximal 70% (oder maximal 60% oder maximal 50%) des maximalen radialen Abstands des ersten Arms beträgt.

Das Fundament kann eine Gewichtskraft oder zumindest einen Teil der Gewichtskraft des Turms aufnehmen. Die Arme können beispielsweise ein Kippen in die jeweilige Richtung verhindern. Zusätzlich können die Arme auch Ankerpunkte oder Umlenkpunkte für Abspannstrukturen sein. Beispielsweise kann der erste Arm des Fundaments für eine erste Abspannstruktur und der zweite Arme des Fundaments für eine zweite Abspannstruktur verwendet werden. Abspannstrukturen können an den Armen des Fundaments umgelenkt oder befestigt werden, um eine effiziente Abspannung des Turms zu ermöglichen. Die Abspannstrukturen können auf das Fundament Kräfte übertragen. Durch den Bereich, der über den minimalen radialen Abstand aufgespannt wird, kann eine Krafteinwirkung auf den ersten und zweiten Arm reduziert werden. Die Kraftverteilung kann im Fundament gleichmäßiger erfolgen. Nach dem beschriebenen Konzept kann das Fundament bis zu einer maximal zulässigen Belastung mehr Kräfte aufnehmen. Ferner kann das Fundament eine Form aufweisen, die einen geringeren Platzbedarf benötigt.

Das Fundament kann ein beliebiges Objekt sein, das sich zum Tragen des Turms eignet. Das Fundament kann z.B. aus Stahlbeton gefertigt sein. Das Fundament kann am ersten und/oder zweiten Arm einen äußeren Kraftumlenkbereich aufweisen. In der Aufsicht kann das Fundament am Ende eines Arms abgerundet, rechteckig, dreieckig, trapezförmig oder anders geformt sein. Der maximale radiale Abstand des ersten Arms und des zweiten Arms können relativ zum Mittelpunkt des Turmaufstellbereichs gleich oder unterschiedlich sein. Beispielsweise können die maximalen radialen Abstände des ersten Arms und des zweiten Arms unabhängig voneinander 10m, 15m, 20m, 30m oder mehr betragen.

Der minimale radiale Abstand kann sich in einer Mitte zwischen dem ersten Arm und dem zweiten Arm befinden und mindestens 25% und maximal 70%, wie z. B. mehr als 25%, mehr als 30%, mehr als 40%, mehr als 50%, mehr als 60% und weniger als 70%, des maximalen radialen Abstands des ersten Arms betragen. Das Fundament kann in seiner äußeren Begrenzung vom maximalen radialen Abstand des ersten Arms über den minimalen radialen Abstand zum maximalen radialen Abstand des zweiten Arms elliptisch, oval, konkav, konvex, parabelförmig, dreieckig, vieleckig oder anders geformt sein.

Der Turmaufstellbereich kann den Bereich im Fundament umfassen, der von dem Turm über dem Fundament eingeschlossen wird. Der Turmaufstellbereich kann in seiner äußeren Begrenzung durch die Außenwand des Turmes definiert sein. Der Mittelpunkt des Turmaufstellbereichs kann durch eine Symmetrieachse oder einen geometrischen Schwerpunkt des Turmaufstellbereichs definiert sein. Vom Mittelpunkt des Turmaufstellbereichs kann sich eine Turmachse des Turms gemäß den vorhergehenden Ausführungen erstrecken.

Die erste Richtung des ersten Arms und die zweite Richtung des zweiten Arms können unterschiedlich sein. Die erste und die zweite Richtung können senkrecht zueinander sein oder einen beliebigen Winkel wie z.B. 30°, 45°, 60°, 72°, 90°, 120° oder mehr einschließen. Der Winkel zwischen den Armen kann durch eine Gesamtanzahl von Armen des Fundaments bestimmt sein. Das Fundament kann mehr als zwei, wie z.B. drei, vier, fünf oder mehr Arme umfassen. Das Fundament kann in der Aufsicht symmetrisch ausgebildet sein.

Der Turm kann eine beliebig hohe Einrichtung sein, die sich vom Boden in eine Höhe erstreckt. Weitere Ausführungen zum Turm können wie oben beschrieben sein.

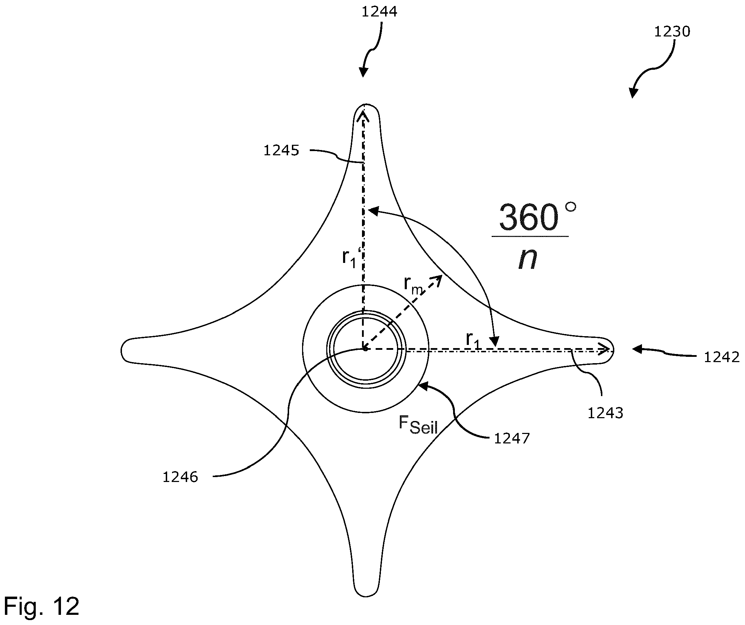

Im Folgenden werden im Zusammenhang mit Fig. 12 ein Ausführungsbeispiel eines Fundaments beschrieben. Das Fundament 1230 kann beispielsweise das Fundament 630, 730, 1030, 1130 oder von einer anderen Art sein.

Fig. 12 zeigt in einer Aufsicht ein Ausführungsbeispiel eines Fundaments 1230 zum Tragen eines Turms, z.B. Turm 102. Das Fundament 1230 umfasst einen ersten Arm 1242, der sich bis zu einem maximalen radialen Abstand $r_1$ von einem Mittelpunkt 1246 eines Turmaufstellbereichs 1247 des Fundaments 1230 in eine erste Richtung 1243 erstreckt. Ferner umfasst das Fundament 1230 einen zweiten Arm 1244, der sich bis zu einem maximalen radialen Abstand $r_1'$ von dem Mittelpunkt 1246 des Turmaufstellbereichs 1247 des Fundaments 1230 in eine zweite Richtung 1245 erstreckt. Ferner erstreckt sich das Fundament 1230 zwischen dem ersten Arm 1242 und dem zweiten Arm 1244 zumindest bis zu einem minimalen radialen Abstand $r_m$ von dem Mittelpunkt 1246 des Turmaufstellbereichs 1247 des Fundaments 1230. Der minimale radiale Abstand $r_m$ beträgt mindestens 25% und maximal 70% des maximalen radialen Abstands n des ersten Arms 1242.

Die Form des Fundaments 1230 mit dem ersten Arm 1242, dem zweiten Arm 1244 und dem Übergangsbereich, über den sich das Fundament von dem ersten Arn 1242 zum zweiten Arm 1242 über den minimalen radialen Abstand $r_m$ erstreckt, kann für eine bessere Krafteinleitung in das Fundament 1230 oder eine gleichmäßigere Kraftverteilung in das Fundament 1230 beitragen. Mittels des Übergangsbereichs, der über den minimalen radialen Abstand $r_m$ aufgespannt ist, kann eine Last auf dem ersten Arm 1242 und eine Last auf dem zweiten Arm 1244 reduziert werden und auf den Übergangsbereich verteilt werden. Eine Last auf den ersten oder zweiten Arm 1242, 1244 oder im Allgemeinen auf das Fundament 1230 kann durch eine Abspannung, wie z.B. eine auf den ersten Arm 1242 wirkende erste Abspannstruktur und eine auf den zweiten Arm 1244 wirkende zweite Abspannstruktur, entstehen. Eine Last auf das Fundament 1230 kann auch durch die Schwerkraft des Turmes, der auf dem Aufstellbereich 1247 des Fundaments 1230 angeordnet ist, entstehen.

Fig. 12 zeigt das Fundament 1230 mit einem gleichen radialen Abstand n und $r_1$'. In einem anderen Ausführungsbeispiel kann sich der der maximale radiale Abstand $r_1$ vom erstem Arm 1242 um weniger als 10% von dem maximalen radialen Abstand $r_1$' von dem zweiten Arm 1244 unterscheiden. Ein Unterschied der Radien kann herstellungsbedingt sein oder für eine bessere oder andere, wie asymmetrische Kraftverteilung, im Fundament 1230 betrachtet werden.

Fig. 12 zeigt das Fundament 1230 mit insgesamt vier Armen, die in einem 90°-Winkel zueinander ausgerichtet sind. Zwischen jedem Arm erstreckt sich das Fundament 1230 über den minimalen radialen Abstand $r_m$. Andere Ausführungsbeispiele sind nicht auf vier Arme, die gezeigten Radien oder eine symmetrische Form beschränkt. Andere Ausführungsbeispiele von Fundamenten umfassen mindestens drei oder mehr Arme wobei in einer Aufsicht zwischen Mittenachsen von jeweils zwei benachbarten Armen ein gleicher Winkel ist. Weist ein Fundament n Arme auf, so beträgt der Winkel zwischen den Armen jeweils beispielsweise $\frac{360°}{n}$.

In einem anderen Ausführungsbeispiel kann ein Fundament zumindest einen ersten Arm mit einem radialen Abstand $r_1$, einen zweiten Arm mit einem radialen Abstand $r_1$' < $r_1$ und einen dritten Arm mit einem radialen Abstand $r_1$" = $r_1$ aufweisen. Das Fundament erstreckt sich von dem ersten Arm über den minimalen radialen Abstand zum zweiten Arm und vom zweiten Arm über den minimalen radialen Abstand zum dritten Arm. Bei dieser Form, die unterschiedliche maximale radiale Abstände $r_1$ und $r_1$' umfasst, kann z.B. eine Kräfteverteilung im Fundament auch symmetrisch sein. Bei dieser Form kann eine Abspannung eines Turms mit unterschiedlichen Abspannradien erfolgen.

Fig. 12 zeigt das Fundament 1230, das sich von dem ersten Arm zu dem zweiten Arm mit einer Krümmung erstreckt. Die Krümmung zwischen dem ersten Arm 1242 und dem zweiten Arm 1244 kann durch einen Kreisbogen beschrieben sein. Der Kreisbogen kann sich auf einem Kreis beziehen, der seinen Kreismittelpunkt zwischen dem ersten Arm 1242 und dem zweiten Arm 1244 hat. Der Kreismittelpunkt kann auf einer Achse liegen, die die Strecke vom Mittelpunkt 1246 eines Turmaufstellbereichs 1247 bis zum minimalen radialen Abstand $r_m$ des Fundaments 1230 umfasst.

In einem anderen Ausführungsbeispiel hat das Fundament 1230 in einer Außenkontur in der Aufsicht zwischen dem ersten und dem zweiten Arm 1242, 1244 eine Krümmung mit einer Abweichung von maximal 10% von einer konstanten Krümmung. Die Krümmung mit einer Abweichung von maximal 10% kann sich z.B. auf mindestens 10%, mindestens 20%, mindestens 30%, mindestens 40%, mindestens 50% oder mindestens 60% der Außenkontur (z.B. in einer Mitte) zwischen dem ersten und dem zweiten Arm beziehen.

In einem anderen Ausführungsbeispiel kann die Außenkontur des Fundaments 1230 zwischen dem ersten Arm 1242 und dem zweiten Arm 1244 elliptisch, oval, konkav, konvex, parabelförmig, dreieckig, vieleckig oder anders geformt sein, sodass das Fundament 1230 einen minimalen radialen Abstand $r_m$ zwischen dem ersten und zweiten Arm aufweist.

Weitere Einzelheiten und optionale Aspekte des Turmbauwerks 100 sind in Verbindung mit dem vorgeschlagenen Konzept oder einem oder mehreren der zuvor oder im Folgenden beschriebenen Beispiele beschrieben.

Ausführungsbeispiele von Turmbauwerken oder Fundamenten können z.B. hinsichtlich der Abspannstrukturen, der Umlenkstrukturen, der Umlenkanordnungen, der äußeren und inneren Kraftumlenkbereiche, der inneren Abspannbereiche, der Befestigungsstrukturen, des Hohlraums im Fundament miteinander beliebig kombiniert werden.

Ausführungsbeispiele von Turmbauwerken, Fundamenten oder Abspannungen können für Windenergieanlagen verwendet werden. Eine Windenergieanlage umfasst beispielsweise das Turmbauwerk 100, 600, 700, 800, 900, 1000 oder 1100 und/oder das Fundament 1030, 1031, 1130 oder 1230.

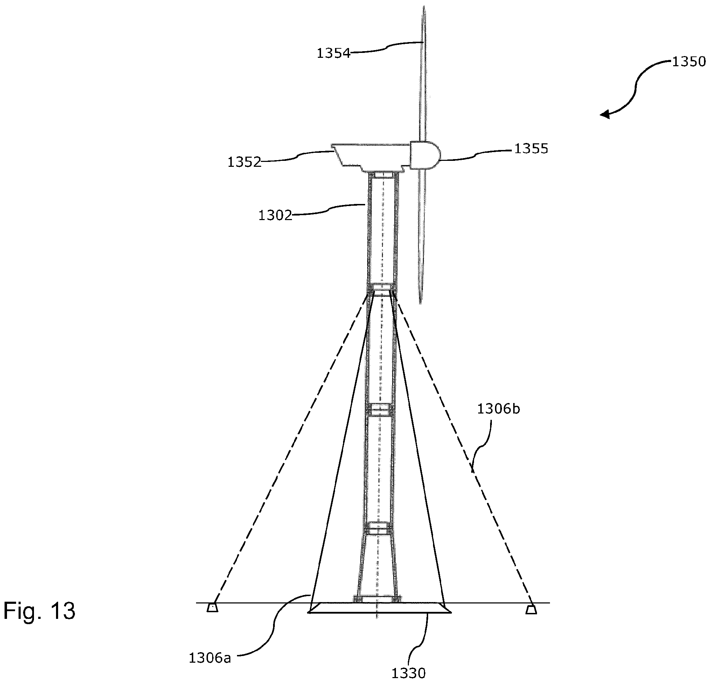

Fig. 13 zeigt einen schematischen Querschnitt einer Windenergieanlage 1350 gemäß einem Ausführungsbeispiel. Die Windenergieanlage 1350 umfasst einen Turm 1302 und ein Maschinenhaus 1352 mit einer Nabe 1355 und einem angeschlossenen Rotor 1354.

Beispielsweise beträgt der Rotordurchmesser 100m oder mehr. Beispielsweise beträgt die Nabenhöhe 120m oder mehr. Die Windenergieanlage 1350 kann mit Abspannstrukturen 1306a und/oder 1306b z.B. über Umlenkstrukturen in Richtung Boden umgelenkt werden. Abspannstrukturen wie z.B. 1306a, können an äußeren Kraftumlenkbereichen des Fundaments 1330 umgelenkt werden. Alternativ oder zusätzlich können Abspannstrukturen, wie z.B. 1306b, an Einzelfundamenten außerhalb des Fundaments 1330 befestigt werden. Beispielsweise beträgt der Fundamentradius abhängig von der Fundamentform 10-30m.

Fig. 13 zeigt die Windenergieanlage mit Turmsektionen. Windenergieanlagen umfassen beispielsweise Stahlrohrtürme. In einem anderen Ausführungsbeispiel kann eine Windenergieanlage oder ein Turmbauwerk, die eine effiziente Abspannung nach einem der oben beschriebenen Konzepte umfasst, ungeteilte Turmsektionen haben. Die Biegebeanspruchung in der Tragstruktur von Windenergieanlagen mit großen Nabenhöhen, wie z.B. >140m, kann sich durch Seil-Abspannungen z.B. um bis zu 50% reduzieren lassen. Dadurch kann ebenfalls der Materialeinsatz für die Tragstrukturen z.B. um bis zu 30% reduziert werden. Zudem könnten die Turmfußdurchmesser innerhalb der Transportrahmenbedingungen von z.B. 4,40 m ausgeführt werden.

Beispielsweise beträgt eine Abspannhöhe am Turm 1302 mindestens 10-120m oder 20-120m über dem Grund. Beispielsweise ergibt sich eine maximale Abspannhöhe aus der Nabenhöhe der Windenergieanlage 1350 minus dem Rotorradius. Optional können sich zusätzlichen Abspannebenen darunter befinden.

Die genannten Ausführungsbespiele sind nicht auf eine Anwendung für Windenergieanlagen beschränkt, sondern können sich auf andere Anwendungen wie z.B. Strommast, Windmessmast, Segelmast, Schornsteine oder allgemein Türme beziehen. Ausführungsbeispiele zu Turmbauwerken und Fundamente können z.B. für Türme höher als 50m, höher als 100m, höher als 140m, höher als 160m oder höher als 180m verwendet werden.

Weitere Ausführungsbeispiele können sich auf Abspannvorrichtungen und deren Verankerungseinrichtungen, die unterhalb vom Geländegrund ausgerichtet sind, beziehen. Dabei können auftretende Turm-Biegemomente über die Abspannvorrichtungen in den Geländegrund oder in das Fundament abgeleitet werden. Die Verankerungseinrichtungen der Turm-Abspannvorrichtungen können vom eigentlichen Turmfundament unabhängig sein bzw. die wirkenden Kräfte können in eine unterhalb des Turmfundaments befindliche weitere Verankerungseinrichtung umgelenkt werden. In einem anderen Ausführungsbeispiel kann die Verankerungseinrichtung ein Teil des Fundaments sein.

Abspannungen können von einem Abspannbereich durch den Turm/Mast zu einem zweiten Abspannbereich am Boden erfolgen. Dabei können drei, vier oder mehrere Abspannbereiche am Boden verwendet werden, welche einen gegenseitigen Winkel von 120°, 90° bzw. 360°/Anzahl Abspannbereiche haben. Die Abspannbereiche können dabei sowohl separat ausgeführt als auch Bestandteil des Turm-/Mastfundamentes sein.

Um den Platzbedarf für die Abspannpunkte am Boden reduzieren zu können und eine effektive Lastverteilung realisieren zu können, kann eine Lastumlenkung gemäß dem oben beschriebenen Konzept stattfinden. Zum Bespiel können im Geländegrund befindlichen Verankerungseinrichtungen ein zweites separates Fundament bzw. ein zusätzliches Basis-Aufnahmesystem unterhalb des bestehenden Turmfundamentes darstellen, die die Zugkräfte der Abspannseile aufnehmen können.

Durch das beschriebene Konzept kann ein Platzbedarf am Boden reduziert werden, so dass eine zusätzliche Flächensicherung vermieden werden kann. Gemäß dem oben beschriebenen Ausführungsbeispiel, kann ein zweites Fundament unter das eigentliche Fundament verlegt werden, um Zugkräfte aufnehmen zu können. Dadurch kann die komplette Abspannmethode als ein in sich geschlossenes System betrachtet werden, welches weitgehend unabhängig von Bodeneigenschaften und -topologie sein kann.

Ein Beispiel (z.B. Beispiel 1) bezieht sich auf ein Turmbauwerk umfassend einen Turm entlang einer senkrechten Turmachse, und ein Abspannseil, das sich aus einer ersten Abspannrichtung zu einer Umlenkstruktur am oder im Turm erstreckt und sich von der Umlenkstruktur in einer zweiten Abspannrichtung in Richtung Boden erstreckt, wobei sich die erste Abspannrichtung von der zweiten Abspannrichtung unterscheidet, wobei die erste Abspannrichtung und die zweite Abspannrichtung in einer Aufsicht einen Winkel kleiner als 180° bilden, wobei die Turmachse außerhalb eines Bereichs liegt, der von dem Abspannseil zwischen der ersten Abspannrichtung und der zweiten Abspannrichtung begrenzt wird.

Ein weiteres Beispiel (z.B. Beispiel 2) bezieht sich auf ein vorhergehendes Beispiel (z.B. Beispiel 2), wobei die Umlenkstruktur mit einer Turmwand des Turmes derart verbunden ist, dass sich eine von dem Abspannseil auf die Umlenkstruktur übertragene Kraft auf die Turmwand überträgt.

Ein weiteres Beispiel (z.B. Beispiel 3) bezieht sich auf ein vorhergehendes Beispiel (z.B. eines der Beispiele 1-2), wobei die Umlenkstruktur eine Kontaktfläche aufweist, wobei das Abspannseil auf der Kontaktfläche aufliegt.

Ein weiteres Beispiel (z.B. Beispiel 4) bezieht sich auf ein vorhergehendes Beispiel (z.B. Beispiel 3), wobei die Kontaktfläche in einer rillenförmigen Vertiefung an einer Oberfläche der Umlenkstruktur ausgebildet ist.

Ein weiteres Beispiel (z.B. Beispiel 5) bezieht sich auf ein vorhergehendes Beispiel (z.B. Beispiel 3), wobei die Umlenkstruktur einen rohrförmigen Bereich aufweist, wobei die Kontaktfläche in dem rohrförmigen Bereich der Umlenkstruktur ausgebildet ist.

Ein weiteres Beispiel (z.B. Beispiel 6) bezieht sich auf ein vorhergehendes Beispiel (z.B. eines der Beispiele 3-5), wobei die Kontaktfläche der Umlenkstruktur eine Krümmung mit einem Krümmungsradius aufweist, wobei der doppelte Krümmungsradius größer als ein minimaler Biegerollendurchmesser des Abspannseils ist.

Ein weiteres Beispiel (z.B. Beispiel 7) bezieht sich auf ein vorhergehendes Beispiel (z.B. eines der Beispiele 3-6), wobei die Kontaktfläche eine Beschaffenheit aufweist, sodass ein Reibungskoeffizient zwischen der Kontaktfläche und dem Abspannseil derart groß ist, sodass durch eine Vorspannung des Abspannseils oder eine Befestigungsvorrichtung ein Reibschluss zwischen der Umlenkstruktur und dem Abspannseil entsteht.

Ein weiteres Beispiel (z.B. Beispiel 8) bezieht sich auf ein vorhergehendes Beispiel (z.B. eines der Beispiele 1-7), wobei die Umlenkstruktur im Inneren des Turms angeordnet ist und mit einer Innenseite der Turmwand verbunden ist.

Ein weiteres Beispiel (z.B. Beispiel 9) bezieht sich auf ein vorhergehendes Beispiel (z.B. Beispiel 8), wobei die Umlenkstruktur zumindest ein Verbindungselement umfasst, das einen die Kontaktfläche umfassenden Teil der Umlenkstruktur mit der Innenseite der Turmwand verbindet.

Ein weiteres Beispiel (z.B. Beispiel 10) bezieht sich auf ein vorhergehendes Beispiel (z.B. eines der Beispiele 8-9), wobei die Turmwand zumindest zwei Öffnungen aufweist, durch die das Abspannseil von außen zu der Umlenkstruktur im Turminneren geführt wird.

Ein weiteres Beispiel (z.B. Beispiel 11) bezieht sich auf ein vorhergehendes Beispiel (z.B. eines der Beispiele 1-10), wobei die Umlenkstruktur über eine Schweißverbindung mit der Turmwand verbunden ist.

Ein weiteres Beispiel (z.B. Beispiel 12) bezieht sich auf ein vorhergehendes Beispiel (z.B. eines der Beispiele 1-11), wobei ein zweites Abspannseil, das sich von dem Turm in Richtung Boden erstreckt, wobei das Abspannseil und das zweite Abspannseil in einer Entfernung von weniger als 1m an einer Fundamentstruktur befestigt sind oder umgelenkt werden.

Ein weiteres Beispiel (z.B. Beispiel 13) bezieht sich auf ein vorhergehendes Beispiel (z.B. Beispiel 12), wobei sich das zweite Abspannseil aus einer dritten Abspannrichtung zu einer zweiten Umlenkstruktur am oder im Turm erstreckt und sich von der zweiten Umlenkstruktur in einer vierten Abspannrichtung in Richtung Boden erstreckt.

Ein weiteres Beispiel (z.B. Beispiel 14) bezieht sich auf ein vorhergehendes Beispiel (z.B. Beispiel 13), wobei eine Umlenkanordnung, die die Umlenkstruktur und die zweite Umlenkstruktur umfasst und einen zentralen offenen Bereich aufweist, durch den die Turmachse verläuft.

Ein weiteres Beispiel (z.B. Beispiel 15) bezieht sich auf ein vorhergehendes Beispiel (z.B. eines der Beispiele 1-14), wobei sich das Abspannseil von einer ersten Abspannhöhe des Turms in Richtung Boden erstreckt, wobei sich ein weiteres Abspannseil von einer zweiten Abspannhöhe in Richtung Boden erstreckt, wobei sich die erste Abspannhöhe von der zweiten Abspannhöhe um mehr als 2m unterscheidet.

Ein weiteres Beispiel (z.B. Beispiel 16) bezieht sich auf ein vorhergehendes Beispiel (z.B. eines der Beispiele 1-15), wobei ein Umlenkelement, das mit einer Außenseite der Turmwand verbunden ist und in geringerer Höhe als die Umlenkstruktur am Turm angeordnet ist, wobei sich das Abspannseil über das Umlenkelement in die erste Abspannrichtung zur Umlenkstruktur erstreckt oder sich von der zweiten Abspannrichtung der Umlenkstruktur über das Umlenkelement in Richtung Boden erstreckt.

Ein weiteres Beispiel (z.B. Beispiel 17) bezieht sich auf ein vorhergehendes Beispiel (z.B. Beispiel 16), wobei das Umlenkelement ausgebildet ist, um eine Zugkraft des Abspannseils zumindest teilweise in eine auf den Turm wirkende Druckkraft zu übertragen.

Ein Beispiel (z.B. Beispiel 18) bezieht sich auf ein Turmbauwerk umfassend einen Turm entlang einer senkrechten Turmachse; ein Fundament zum Tragen des Turmes, wobei der Turm auf dem Fundament steht, wobei das Fundament einen äußeren Kraftumlenkbereich aufweist, der einen radialen Abstand von der Turmachse aufweist; und eine erste Abspannstruktur, wobei sich die erste Abspannstruktur von dem äußeren Kraftumlenkbereich zu einem Teil des Turms oberhalb des Fundaments erstreckt, wobei sich die erste Abspannstruktur oder eine mit der ersten Abspannstruktur an dem äußeren Kraftumlenkbereich gekoppelte, zweite Abspannstruktur von dem äußeren Kraftumlenkbereich zu einem inneren Abspannbereich unterhalb des äußeren Kraftumlenkbereichs erstreckt, wobei ein radialer Abstand des inneren Abspannbereichs von der Turmachse kleiner ist als der radiale Abstand des äußeren Kraftumlenkbereichs.

Ein weiteres Beispiel (z.B. Beispiel 19) bezieht sich auf ein vorhergehendes Beispiel (z.B. Beispiel 18), wobei der innere Abspannbereich ein Teil des Fundaments ist.

Ein weiteres Beispiel (z.B. Beispiel 20) bezieht sich auf ein vorhergehendes Beispiel (z.B. Beispiel 18), wobei das Turmbauwerk ferner ein zweites Fundament umfasst, das sich zumindest teilweise unterhalb des ersten Fundaments befindet und von dem ersten Fundament beabstandet ist, wobei der innere Abspannbereich ein Teil des zweiten Fundaments ist.

Ein weiteres Beispiel (z.B. Beispiel 21) bezieht sich auf ein vorhergehendes Beispiel (z.B. eines der Beispiele 18-20), wobei eine von der zumindest ersten Abspannstruktur auf den äußeren Kraftumlenkbereich übertragene Druckkraft auf das Fundament wirkt, wobei die Druckkraft am äußeren Kraftumlenkbereich mit einem Winkel zu einer horizontalen Ebene senkrecht zur Turmachse wirkt, wobei der Winkel mindestens 15° und maximal 30° ist.

Ein weiteres Beispiel (z.B. Beispiel 22) bezieht sich auf ein vorhergehendes Beispiel (z.B. eines der Beispiele 18-21), wobei das Fundament einen zweiten äußeren Kraftumlenkbereich aufweist, der von der Turmachse einen zweiten radialen Abstand hat, der sich von einem ersten radialen Abstand des äußeren Kraftumlenkbereichs um mindestens 20% des ersten radialen Abstands unterscheidet, wobei sich eine weitere Abspannstruktur von dem zweiten äußeren Kraftumlenkbereich zu einem Teil des Turms oberhalb des Fundaments erstreckt.

Ein weiteres Beispiel (z.B. Beispiel 23) bezieht sich auf ein vorhergehendes Beispiel (z.B. eines der Beispiele 18-22), wobei die erste Abspannstruktur ein Abspannseil ist.

Ein weiteres Beispiel (z.B. Beispiel 24) bezieht sich auf ein vorhergehendes Beispiel (z.B. Beispiel 23), wobei sich das Abspannseil von dem Turm über den äußeren Kraftumlenkbereich zu dem inneren Abspannbereich erstreckt.

Ein Beispiel (z.B. Beispiel 25) bezieht sich auf ein Turmbauwerk umfassend einen Turm entlang einer senkrechten Turmachse; ein Fundament zum Tragen des Turmes, wobei der Turm auf dem Fundament steht, wobei das Fundament einen äußeren Kraftumlenkbereich aufweist, der außerhalb einer Grundfläche des Turms liegt; und eine Abspannstruktur, die sich von einer Außenseite des Turms zu dem äußeren Kraftumlenkbereich erstreckt und von dem äußeren Kraftumlenkbereich durch eine Öffnung im Fundament von unterhalb des Turms zu einer Befestigungsstruktur im Turminneren erstreckt.

Ein weiteres Beispiel (z.B. Beispiel 26) bezieht sich auf ein vorhergehendes Beispiel (z.B. Beispiel 25), wobei die Befestigungsstruktur an der Turmwand des Turms oder einem Querflansch oder Längsflansch des Turms befestigt ist.

Ein weiteres Beispiel (z.B. Beispiel 27) bezieht sich auf ein vorhergehendes Beispiel (z.B. eines der Beispiele 25-26), wobei die Abspannstruktur ein Abspannseil ist.

Ein weiteres Beispiel (z.B. Beispiel 28) bezieht sich auf ein vorhergehendes Beispiel (z.B. eines der Beispiele 25-27), wobei die Abspannstruktur ein erstes Abspannseil aufweist, das sich von der Außenseite des Turms zu dem äußeren Kraftumlenkbereich erstreckt, und ein zweites Abspannseil aufweist, das sich von dem äußeren Kraftumlenkbereich durch die Öffnung im Fundament zu der Befestigungsstruktur erstreckt.

Ein weiteres Beispiel (z.B. Beispiel 29) bezieht sich auf ein vorhergehendes Beispiel (z.B. eines der Beispiele 25-28), wobei das Fundament einen inneren Kraftumlenkbereich aufweist, wobei sich die Abspannstruktur von dem äußeren Kraftumlenkbereich über den inneren Kraftumlenkbereich zur Befestigungsstruktur erstreckt.

Ein weiteres Beispiel (z.B. Beispiel 30) bezieht sich auf ein vorhergehendes Beispiel (z.B. Beispiel 29), wobei der äußere Kraftumlenkbereich einen ersten radialen Abstand von der Turmachse aufweist und in einer ersten Tiefe angeordnet ist und der innere Kraftumlenkbereich einen zweiten radialen Abstand von der Turmachse aufweist und in einer zweiten Tiefe angeordnet ist, wobei der zweite radiale Abstand kleiner als der erste radiale Abstand ist und die erste Tiefe größer als die zweite Tiefe ist.

Ein weiteres Beispiel (z.B. Beispiel 31) bezieht sich auf ein vorhergehendes Beispiel (z.B. Beispiel 30), wobei die erste Tiefe des äußeren Kraftumlenkbereichs um mindestens 1m größer ist als die zweite Tiefe des inneren Kraftumlenkbereichs.

Ein weiteres Beispiel (z.B. Beispiel 32) bezieht sich auf ein vorhergehendes Beispiel (z.B. eines der Beispiele 25-31), wobei eine von der Abspannstruktur auf den äußeren Kraftumlenkbereich übertragene Druckkraft auf das Fundament wirkt, wobei die Druckkraft am äußeren Kraftumlenkbereich mit einem Winkel zu einer horizontalen Ebene senkrecht zur Turmachse wirkt, wobei der Winkel mindestens 30° und maximal 60° ist.

Ein weiteres Beispiel (z.B. Beispiel 33) bezieht sich auf ein vorhergehendes Beispiel (z.B. eines der Beispiele 25-32), wobei das Fundament einen zentralen Hohlraum unter dem Turm aufweist.

Ein weiteres Beispiel (z.B. Beispiel 34) bezieht sich auf ein vorhergehendes Beispiel (z.B. Beispiel 33), wobei der zentrale Hohlraum die Öffnung im Fundament bildet, durch die sich die Abspannstruktur erstreckt.

Ein weiteres Beispiel (z.B. Beispiel 35) bezieht sich auf ein vorhergehendes Beispiel (z.B. eines der Beispiele 33-34), wobei eine Vorrichtung oder Betriebsanlage, die in dem zentralen Hohlraum angeordnet ist.

Ein weiteres Beispiel (z.B. Beispiel 36) bezieht sich auf ein vorhergehendes Beispiel (z.B. eines der Beispiele 33-35), wobei der zentrale Hohlraum belüftet ist, wobei die Belüftung des Hohlraums durch eine Belüftungsöffnung durch das Fundament oder einen Belüftungskanal unterhalb des Fundaments erfolgt.

Ein weiteres Beispiel (z.B. Beispiel 37) bezieht sich auf ein vorhergehendes Beispiel (z.B. eines der Beispiele 33-36), wobei das Fundament einen weiteren äußeren Kraftumlenkbereich aufweist, der von der Turmachse einen radialen Abstand hat, der sich von dem radialen Abstand des äußeren Kraftumlenkbereichs um mindestens 20% des radialen Abstands des äußeren Kraftumlenkbereichs unterscheidet, wobei sich eine weitere Abspannstruktur von einer Außenseite des Turms zu dem weiteren äußeren Kraftumlenkbereich erstreckt.

Ein weiteres Beispiel (z.B. Beispiel 38) bezieht sich auf ein vorhergehendes Beispiel (z.B. eines der Beispiele 23, 24 oder 27), wobei der äußere Kraftumlenkbereich eine Krümmung mit einem Krümmungsradius aufweist, wobei der doppelte Krümmungsradius größer als ein minimaler Biegerollendurchmesser des Abspannseils ist.

Ein Beispiel bezieht sich auf eine Windenergieanlage umfassend ein Turmbauwerk nach einem der vorhergehenden Beispiele (z.B. Beispiel 1-38 oder ein Beispiel, wie es in den Figuren beschreiben ist).

Die Aspekte und Merkmale, die im Zusammenhang mit einem bestimmten der vorherigen Beispiele beschrieben sind, können auch mit einem oder mehreren der weiteren Beispiele kombiniert werden, um ein identisches oder ähnliches Merkmal dieses weiteren Beispiels zu ersetzen oder um das Merkmal in das weitere Beispiel zusätzlich einzuführen.

Es versteht sich ferner, dass die Offenbarung mehrerer, in der Beschreibung oder den Ansprüchen offenbarter Schritte, Prozesse, Operationen oder Funktionen nicht als zwingend in der beschriebenen Reihenfolge befindlich ausgelegt werden soll, sofern dies nicht im Einzelfall explizit angegeben oder aus technischen Gründen zwingend erforderlich ist. Daher wird durch die vorhergehende Beschreibung die Durchführung von mehreren Schritten oder Funktionen nicht auf eine bestimmte Reihenfolge begrenzt. Ferner kann bei weiteren Beispielen ein einzelner Schritt, eine einzelne Funktion, ein einzelner Prozess oder eine einzelne Operation mehrere Teilschritte, -funktionen, -prozesse oder -operationen einschließen und/oder in dieselben aufgebrochen werden.

Wenn einige Aspekte in den vorhergehenden Abschnitten im Zusammenhang mit einer Vorrichtung oder einem System beschrieben wurden, sind diese Aspekte auch als eine Beschreibung des entsprechenden Verfahrens zu verstehen. Dabei kann beispielsweise ein Block, eine Vorrichtung oder ein funktionaler Aspekt der Vorrichtung oder des Systems einem Merkmal, etwa einem Verfahrensschritt, des entsprechenden Verfahrens entsprechen. Entsprechend dazu sind Aspekte, die im Zusammenhang mit einem Verfahren beschrieben werden, auch als eine Beschreibung eines entsprechenden Blocks, eines entsprechenden Elements, einer Eigenschaft oder eines funktionalen Merkmals einer entsprechenden Vorrichtung oder eines entsprechenden Systems zu verstehen.

Die Erfindung wird durch die beigefügten Ansprüche definiert.

**Patentansprüche**

1. Turmbauwerk (100), umfassend:

   einen Turm (102) entlang einer senkrechten Turmachse (104); und
   ein Abspannseil (106a), das sich aus einer ersten Abspannrichtung (107a) zu einer Umlenkstruktur (210a) am oder im Turm (102) erstreckt und sich von der Umlenkstruktur (210a) in einer zweiten Abspannrichtung (108a) in Richtung Boden erstreckt, wobei sich die erste Abspannrichtung (107a) von der zweiten Abspannrichtung (108a) unterscheidet, wobei die erste Abspannrichtung (107a) und die zweite Abspannrichtung (108a) in einer Aufsicht (201) einen Winkel kleiner als 180° und größer als 10° bilden, wobei die Turmachse (104) außerhalb eines Bereichs liegt, der von dem Abspannseil (106a) zwischen der ersten Abspannrichtung (107a) und der zweiten Abspannrichtung (108a) begrenzt wird.

2. Turmbauwerk (100) nach Anspruch 1, wobei die Umlenkstruktur (210a) mit einer Turmwand (203) des Turmes (102) derart verbunden ist, dass sich eine von dem Abspannseil (106a) auf die Umlenkstruktur (210a) übertragene Kraft auf die Turmwand (203) überträgt.

3. Turmbauwerk (100) nach Anspruch 1 oder 2, wobei die Umlenkstruktur (310, 410) eine Kontaktfläche (312, 412) aufweist, wobei das Abspannseil (106a) auf der Kontaktfläche (312, 412) aufliegt.

4. Turmbauwerk (100) nach Anspruch 3, wobei die Kontaktfläche (312) in einer rillenförmigen Vertiefung an einer Oberfläche der Umlenkstruktur (310) ausgebildet ist.

5. Turmbauwerk (100) nach Anspruch 3, wobei die Umlenkstruktur (410) einen rohrförmigen Bereich aufweist, wobei die Kontaktfläche (412) in dem rohrförmigen Bereich der Umlenkstruktur (410) ausgebildet ist.

6. Turmbauwerk (100) nach einem der Ansprüche 3 bis 5, wobei die Kontaktfläche (312, 412) der Umlenkstruktur (310, 410) eine Krümmung mit einem Krümmungsradius aufweist, wobei der doppelte Krümmungsradius größer als ein minimaler Biegerollendurchmesser des Abspannseils (106a) ist.

7. Turmbauwerk (100) nach einem der Ansprüche 3 bis 6, wobei die Kontaktfläche (312, 412) eine Beschaffenheit aufweist, sodass ein Reibungskoeffizient zwischen der Kontaktfläche (312, 412) und dem Abspannseil (106a) derart groß ist, sodass durch eine Vorspannung des Abspannseils (106a) oder eine Befestigungsvorrichtung ein Reibschluss zwischen der Umlenkstruktur (310, 410) und dem Abspannseil (106a) entsteht.

8. Turmbauwerk (100) nach einem der vorhergehenden Ansprüche, wobei die Umlenkstruktur (210a, 510a) im Inneren des Turms (102) angeordnet ist und mit einer Innenseite der Turmwand (203) verbunden ist.

9. Turmbauwerk (100) nach Anspruch 8, wobei die Umlenkstruktur (510a) zumindest ein Verbindungselement (514a) umfasst, das einen die Kontaktfläche umfassenden Teil der Umlenkstruktur (510a) mit der Innenseite der Turmwand (203) verbindet.

10. Turmbauwerk (100) nach Anspruch 8 oder 9, wobei die Turmwand (203) zumindest zwei Öffnungen (516a) aufweist, durch die das Abspannseil (106a) von außen zu der Umlenkstruktur (510a) im Turminneren geführt wird.

11. Turmbauwerk (100) nach einem der vorhergehenden Ansprüche, wobei
die Umlenkstruktur (510a) über eine Schweißverbindung mit der Turmwand (203) verbunden ist.

**12.** Turmbauwerk (100) nach einem der vorhergehenden Ansprüche, ferner umfassend:
ein zweites Abspannseil (106b), das sich von dem Turm (102) in Richtung Boden erstreckt, wobei das Abspannseil (106a) und das zweite Abspannseil (106b) in einer Entfernung von weniger als 1m an einer Fundamentstruktur befestigt sind oder umgelenkt werden.

**13.** Windenergieanlage (1350), umfassend:
Turmbauwerk (100, 600, 700, 800, 900, 1000, 1100) nach einem der vorhergehenden Ansprüche 1 bis 12.

**Claims**

**1.** Tower structure (100), comprising:

a tower (102) along a vertical tower axis (104); and
a guy cable (106a) which extends from a first guying direction (107a) to a deflection structure (210a) on or in the tower (102) and extends from the deflection structure (210a) in a second guying direction (108a) in the direction of the ground, wherein the first guying direction (107a) differs from the second guying direction (108a), wherein the first guying direction (107a) and the second guying direction (108a) form an angle of less than 180° and greater than 10° in a plan view (201), wherein the tower axis (104) lies outside a region which is delimited by the guy cable (106a) between the first guying direction (107a) and the second guying direction (108a).

**2.** Tower structure (100) according to claim 1, wherein the deflection structure (210a) is connected to a tower wall (203) of the tower (102) such that a force transmitted from the guy cable (106a) to the deflection structure (210a) is transmitted to the tower wall (203).

**3.** Tower structure (100) according to claim 1 or 2, wherein
the deflection structure (310, 410) has a contact area (312, 412), wherein the guy cable (106a) rests on the contact area (312, 412).

**4.** Tower structure (100) according to claim 3, wherein the contact area (312) is formed in a groove-shaped recess on a surface of the deflection structure (310).

**5.** Tower structure (100) according to claim 3, wherein

the deflection structure (410) has a tubular region, wherein the contact area (412) is formed in the tubular region of the deflection structure (410).

**6.** Tower structure (100) according to any one of claims 3 to 5, wherein
the contact area (312, 412) of the deflection structure (310, 410) has a curvature with a radius of curvature, wherein twice the radius of curvature is greater than a minimum mandrel diameter of the guy cable (106a).

**7.** Tower structure (100) according to any one of claims 3 to 6, wherein
the contact area (312, 412) has a nature such that a coefficient of friction between the contact area (312, 412) and the guy cable (106a) is so large that a frictional connection between the deflection structure (310, 410) and the guy cable (106a) is created by a pretensioning of the guy cable (106a) or a fastening device.

**8.** Tower structure (100) according to any one of the preceding claims, wherein
the deflection structure (210a, 510a) is arranged inside the tower (102) and is connected to an inner side of the tower wall (203).

**9.** Tower structure (100) according to claim 8, wherein the deflection structure (510a) comprises at least one connecting element (514a) which connects a part of the deflection structure (510a) comprising the contact area to the inner side of the tower wall (203).

**10.** Tower structure (100) according to claim 8 or 9, wherein
the tower wall (203) has at least two openings (516a) through which the guy cable (106a) is guided from the outside to the deflection structure (510a) inside the tower.

**11.** Tower structure (100) according to any one of the preceding claims, wherein
the deflection structure (510a) is connected to the tower wall (203) via a welded connection.

**12.** Tower structure (100) according to any one of the preceding claims, further comprising:
a second guy cable (106b) which extends from the tower (102) towards the ground, wherein the guy cable (106a) and the second guy cable (106b) are mounted to a foundation structure at a distance of less than 1 m or are deflected.

**13.** Wind turbine (1350), comprising:
tower structure (100, 600, 700, 800, 900, 1000, 1100) according to any one of the preceding claims 1 to 12.

**Revendications**

1. Structure de tour (100) comprenant :

   une tour (102) le long d'un axe de tour vertical (104) ; et
   un hauban (106a) qui s'étend depuis une première direction de hauban (107a) jusqu'à une structure de déviation (210a) sur ou dans la tour (102) et qui s'étend depuis la structure de déviation (210a) dans une deuxième direction de hauban (108a) en direction du sol, la première direction de hauban (107a) étant différente de la deuxième direction de hauban (108a), la première direction de hauban (107a) et la deuxième direction de hauban (108a) formant, dans une vue de dessus (201), un angle inférieur à 180° et supérieur à 10°, l'axe de tour (104) se situant en dehors d'une région qui est délimitée par le hauban (106a) entre la première direction de hauban (107a) et la deuxième direction de hauban (108a).

2. Structure de tour (100) selon la revendication 1, dans laquelle
   la structure de déviation (210a) est reliée à une paroi de tour (203) de la tour (102) de telle sorte qu'une force transmise du hauban (106a) à la structure de déviation (210a) soit transmise à la paroi de tour (203).

3. Structure de tour (100) selon la revendication 1 ou 2, dans laquelle
   la structure de déviation (310, 410) présente une surface de contact (312, 412), le hauban (106a) reposant sur la surface de contact (312, 412).

4. Structure de tour (100) selon la revendication 3, dans laquelle
   la surface de contact (312) est réalisée dans un renfoncement en forme de rainure sur une surface de la structure de déviation (310).

5. Structure de tour (100) selon la revendication 3, dans laquelle
   la structure de déviation (410) présente une région tubulaire, la surface de contact (412) étant réalisée dans la région tubulaire de la structure de déviation (410).

6. Structure de tour (100) selon l'une des revendications 3 à 5, dans laquelle
   la surface de contact (312, 412) de la structure de déviation (310, 410) présente une courbure avec un rayon de courbure, le double du rayon de courbure étant supérieur à un diamètre de rouleau de flexion minimal du hauban (106a).

7. Structure de tour (100) selon l'une des revendications 3 à 6, dans laquelle
   la surface de contact (312, 412) présente une nature telle qu'un coefficient de frottement entre la surface de contact (312, 412) et le hauban (106a) soit si grand qu'une précontrainte du hauban (106a) ou un dispositif de fixation crée une liaison par friction entre la structure de déviation (310, 410) et le hauban (106a).

8. Structure de tour (100) selon l'une des revendications précédentes, dans laquelle
   la structure de déviation (210a, 510a) est disposée à l'intérieur de la tour (102) et est reliée à un côté intérieur de la paroi de tour (203).

9. Structure de tour (100) selon la revendication 8, dans laquelle
   la structure de déviation (510a) comprend au moins un élément de connexion (514a) qui relie une partie de la structure de déviation (510a) comprenant la surface de contact au côté intérieur de la paroi de tour (203).

10. Structure de tour (100) selon la revendication 8 ou 9, dans laquelle
    la paroi de tour (203) présente au moins deux ouvertures (516a) à travers lesquelles le hauban (106a) est guidé de l'extérieur vers la structure de déviation (5 10a) à l'intérieur de la tour.

11. Structure de tour (100) selon l'une des revendications précédentes, dans laquelle
    la structure de déviation (510a) est reliée à la paroi de tour (203) par une connexion par soudage.

12. Structure de tour (100) selon l'une des revendications précédentes, comprenant en outre :
    un deuxième hauban (106b) qui s'étend depuis la tour (102) en direction du sol, le hauban (106a) et le deuxième hauban (106b) étant fixés à une structure de fondation à une distance inférieure à 1 m ou étant déviés.

13. Eolienne (1350) comprenant :
    structure de tour (100, 600, 700, 800, 900, 1000, 1100) selon l'une des revendications précédentes 1 à 12.

Fig. 1

EP 4 008 858 B1

Fig. 2

EP 4 008 858 B1

Fig. 4

Fig. 3

Fig. 5

EP 4 008 858 B1

Fig. 7

Fig. 6

Fig. 9

Fig. 8

Fig. 10

Fig. 11

Fig. 12

EP 4 008 858 B1

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2388878 A2
- CN 108729731 A
- CH 693103 A5